# EUROPEAN PATENT APPLICATION

(11) **EP 4 560 873 A1**
(43) Date of publication of application: **28.05.2025**
(21) Application number: 23859143.2
(22) Date of filing: 14.08.2023
(51) Int. Cl.: H02J 7/00

(54) **CHARGING METHOD AND ELECTRIC DEVICE**

(30) Priority: 27.08.2022 CN 202211035976; 30.11.2022 CN 202211528750
(71) Applicant: Huawei Technologies Co., Ltd., Shenzhen, Guangdong 518129 (CN)
(72) Inventor: ZHENG, Liansheng, Shenzhen, Guangdong 518129 (CN); WANG, Chao, Shenzhen, Guangdong 518129 (CN); DONG, Chuanlong, Shenzhen, Guangdong 518129 (CN); FENG, Ziyun, Shenzhen, Guangdong 518129 (CN)
(74) Representative: Isarpatent
(86) International application number: PCT/CN2023/112973
(87) International publication number: WO 2024/046109

(57) **Abstract**

Embodiments of this application disclose a charging method and a power consumption device, and relate to the field of electronic technologies. In this case, the power consumption device can be charged based on a preset charging parameter when a charging protocol used by the power consumption device is switched, and the power consumption device can match with a changed protocol during charging based on the preset charging parameter. The charging method is applied to the power consumption device. The power consumption device is configured to: connect to a power supply device through a cable, and control the power supply device to supply power to the power consumption device. Both the power consumption device and the power supply device support a first protocol and a second protocol. The charging method includes: controlling the power supply device to charge the power consumption device according to the first protocol; when it is determined that the power supply device supports the second protocol, controlling the power supply device to charge the power consumption device based on the preset charging parameter; and after controlling the power supply device to charge the power consumption device based on the preset charging parameter, controlling, based on obtained through-current capability information of the cable, the power supply device to charge the power consumption device according to the second protocol.

## Description

This application claims priorities to Chinese Patent Application No. 202211035976.3, filed with the China National Intellectual Property Administration on August 27, 2022 and entitled "CHARGING METHOD", and to Chinese Patent Application No. 202211528750.7, filed with the China National Intellectual Property Administration on November 30, 2022 and entitled "CHARGING METHOD AND POWER CONSUMPTION DEVICE", both of which are incorporated herein by reference in their entireties.

### TECHNICAL FIELD

Embodiments of this application relate to the field of electronic technologies, and in particular, to a charging method and a power consumption device.

### BACKGROUND

With development and popularization of electronic devices, people use the electronic devices more frequently. Currently, an electronic device that needs to be charged (referred to as a power consumption device below) may establish a communication connection to a power supply device, and control the power supply device to charge the power consumption device according to a charging protocol.

However, when both the power consumption device and the power supply device support a plurality of charging protocols, the power consumption device may control, as required in a charging process, the power supply device to switch the charging protocol. For example, the power consumption device may control, according to a preset rule, the power supply device to switch a current charging protocol to a charging protocol with higher charging power to proceed charging. How the power consumption device implements collaborative management of the plurality of charging protocols (for example, whether to perform charging protocol switching, when to perform charging protocol switching, and how to perform charging protocol switching) is a problem to be resolved.

### SUMMARY

Embodiments of this application provide a charging method and a power consumption device. When a charging protocol used by the power consumption device is switched from a first protocol to a second protocol, a power supply device is controlled to first charge the power consumption device based on a preset charging parameter, and then charge the power consumption device according to the second protocol. A design in which the power consumption device is first charged based on the preset charging parameter may provide sufficient time for the power consumption device to complete matching with the second protocol, thereby implementing collaborative management of time at which the power consumption device switches the charging protocol and time at which the power consumption device matches the second protocol. This reduces a probability that the power consumption device does not match the second protocol when the power supply device charges the power consumption device according to the second protocol, can increase a charging speed of the power consumption device, and can improve user experience.

According to a first aspect, this application provides a charging method, applied to a power consumption device. The power consumption device is configured to: connect to a power supply device through a cable, and control the power supply device to supply power to the power consumption device. Both the power consumption device and the power supply device support a first protocol and a second protocol. The charging method includes: controlling the power supply device to charge the power consumption device according to the first protocol; when it is determined that the power supply device supports the second protocol, controlling the power supply device to charge the power consumption device based on the preset charging parameter; and after controlling the power supply device to charge the power consumption device based on the preset charging parameter, controlling, based on obtained through-current capability information of the cable, the power supply device to charge the power consumption device according to the second protocol. Apparently, in the charging method, after it is determined that the power supply device supports the second protocol, the power supply device is controlled to first charge the power consumption device for a period of time based on the preset charging parameter, and then charge the power consumption device according to the second protocol. In this way, the power consumption device may complete matching of the second protocol within time for charging based on the preset charging parameter, and the power consumption device has sufficient time to complete matching of the second protocol, so that collaborative management of time for switching the charging protocol by the power consumption device and time for matching the second protocol by the power consumption device can be implemented. Therefore, through collaborative management of the power consumption device, a probability that the power consumption device does not match the second protocol when the power supply device charges the power consumption device according to the second protocol can be reduced, thereby improving a charging speed and user experience of the power consumption device.

In a possible implementation, the charging method further includes: disconnecting, in response to determining that the power supply device supports the second protocol, a first protocol-based communication connection to the power supply device. Apparently, after determining that the power supply device supports the second protocol, the power consumption device may disconnect the first protocol-based communication connection to the power supply device, so that the power supply device stops charging the power consumption device according to the first protocol, and automatically switches to charging the power consumption device based on the preset charging parameter. In other words, the power consumption device may control, based on a feature of the power supply device, the power supply device to charge the power consumption device based on the preset charging parameter, to improve convenience of designing the charging method and speed of running the charging method.

In a possible implementation, the power consumption device includes a charging management unit and a battery that are electrically connected, and before the controlling the power supply device to charge the power consumption device according to the first protocol, the charging method further includes: controlling, according to the first protocol, the charging management unit to adjust output to the battery. Apparently, after the power consumption device controls, according to the first protocol, the charging management unit to adjust the output to the battery, the first protocol can be matched. In this way, a case in which charging is stagnant, a charging speed is slow, or an instantaneous voltage or current input to the battery is excessively high because the power consumption device does not match the first protocol when the power supply device charges the power consumption device according to the first protocol can be reduced, thereby improving charging safety and smoothness of the power consumption device.

In a possible implementation, the controlling, according to the first protocol, the charging management unit to adjust output to the battery includes: outputting first management information to the charging management unit according to the first protocol; and the charging management unit adjusts the output to the battery based on the first management information. The first management information includes a target value of an internal parameter or an output parameter of the charging management unit when the power consumption device is charged according to the first protocol.

In a possible implementation, the power consumption device includes a charging management unit and a battery that are electrically connected. Before the controlling the power supply device to charge the power consumption device according to the second protocol, the charging method further includes: controlling the charging management unit to adjust the output to the battery according to the second protocol. Apparently, after the power consumption device controls, according to the second protocol, the charging management unit to adjust the output to the battery, the second protocol can be matched. In this way, a case in which charging is stagnant, a charging speed is slow, or an instantaneous voltage or current input to the battery is excessively high because the power consumption device does not match the second first protocol when the power supply device charges the power consumption device according to the second protocol can be reduced, thereby improving charging safety and smoothness of the power consumption device.

In a possible implementation, the controlling, according to the second protocol, the charging management unit to adjust output to the battery includes: outputting second management information to the charging management unit according to the second protocol; and the charging management unit adjusts the output to the battery based on the second management information. The second management information includes a target value of an internal parameter or an output parameter of the charging management unit when the power consumption device is charged according to the second protocol.

In a possible implementation, the power consumption device includes a charging management unit and a battery that are electrically connected, and the controlling the power supply device to charge the power consumption device based on a preset charging parameter includes: outputting preset management information to the charging management unit; and the charging management unit adjusts output to the battery based on the preset management information. The preset management information includes a target value of an internal parameter or an output parameter of the charging management unit when the power consumption device is charged based on the preset charging parameter. Apparently, the charging management unit adjusts the internal parameter of the charging management unit based on the preset management information, and after the power supply device charges the power consumption device based on the preset charging parameter, the output of the charging management unit for the battery may be equal to the preset charging parameter, so that the power consumption device is charged based on the preset charging parameter.

In a possible implementation, before the controlling the power supply device to charge the power consumption device according to the first protocol, the charging method further includes: determining that the power consumption device is connected to the power supply device through a cable; and determining that the power supply device supports the first protocol. Apparently, the power consumption device may detect a level change of a first pin unit, to determine whether the power consumption device is connected to the power supply device through the cable, and after determining that the power consumption device is connected to the power supply device through the cable, identify in time whether the power supply device supports the first protocol. A priority of identifying, by the power consumption device, whether the power supply device supports the first protocol is higher than a priority of identifying, by the power consumption device, whether the power supply device supports the second protocol.

In a possible implementation, the through-current capability information includes a maximum current that can pass through the cable and/or a maximum voltage at which the cable can operate. The cable includes a storage unit. The charging method further includes: obtaining the through-current capability information of the cable from the storage unit. Apparently, after determining that the storage unit exists, the power consumption device may obtain the through-current capability information from the storage unit through a first channel, and calculate, based on the obtained through-current capability information, an actual charging parameter of the power supply device during charging according to a charging protocol.

In a possible implementation, before obtaining the through-current capability information of the cable, the charging method further includes: determining that the cable includes the storage unit; and supplying power to the storage unit. Apparently, the power consumption device may become a power supply party of the storage unit according to a stipulation of the first protocol, to obtain the through-current capability information from the storage unit through the first channel.

In a possible implementation, after the controlling the power supply device to charge the power consumption device based on the preset charging parameter, the charging method further includes: determining that the cable does not include the storage unit; and invoking preset capability information, where the preset capability information is the through-current capability information of the cable when the cable does not include the storage unit. Apparently, after determining that the cable does not include the storage unit, the power consumption device may calculate, based on the preset capability information, the actual charging parameter when the power consumption device is charged according to the second protocol. In this way, a probability that some or all of the actual charging parameters exceed a through-current capability of the cable when the power consumption device is charged according to the second protocol can be reduced, a probability that the power consumption device is damaged can be reduced, and safety during charging can be improved. In addition, the power consumption device can continue to be charged according to the second protocol, and charging power of the power consumption device can be increased.

In a possible implementation, before the supplying power to the storage unit, the charging method further includes: outputting first change information to the power supply device, where the first change information indicates the power supply device to stop supplying power to the storage unit. Apparently, the power consumption device may request, based on the first change information, the power supply device to stop supplying power to the storage unit, and then start to supply power to the storage unit, to become a power supply party of the storage unit. This can reduce energy consumption of supplying power to the storage unit by the power supply device.

In a possible implementation, the controlling the power supply device to charge the power consumption device according to the second protocol includes: determining, based on the through-current capability information and power supply capability information corresponding to the second protocol, the actual charging parameter corresponding to the second protocol; and controlling the power supply device to charge the power consumption device based on the actual charging parameter. Apparently, the power consumption device may compare the through-current capability information with the power supply capability information, to determine whether a parameter in the through-current capability information is greater than a parameter in the power supply capability information. Then, the power consumption device may use a parameter with a smaller value in the through-current capability information and the power supply capability information as the actual charging parameter, to reduce a case in which the charging parameter of the power consumption device exceeds the through-current capability information of the cable when the power consumption device is charged according to the second protocol, and improve charging safety of the power consumption device.

In a possible implementation, the power consumption device includes a first protocol unit, and the controlling the power supply device to charge the power consumption device according to a first protocol includes: controlling the first protocol unit to output a first instruction to the power supply device, where the first instruction instructs the power supply device to charge the power consumption device according to the first protocol.

In a possible implementation, the power consumption device includes a second protocol unit, and the controlling the power supply device to charge the power consumption device according to the second protocol includes: controlling the second protocol unit to output a second instruction to the power supply device, where the second instruction instructs the power supply device to charge the power consumption device according to the second protocol.

In a possible implementation, charging power of the power consumption device charged based on the preset charging parameter is less than charging power of the power consumption device charged according to the first protocol, and the charging power of the power consumption device charged based on the preset charging parameter is less than charging power of the power consumption device charged according to the second protocol.

According to a second aspect, this application provides a power consumption device. The power consumption device is configured to: connect to a power supply device through a cable, and control the power supply device to supply power to the power consumption device. The power supply device supports the first protocol and the second protocol. The power consumption device includes: a first protocol unit, configured to enable the power consumption device to support the first protocol; a second protocol unit, configured to enable the power consumption device to support the second protocol; and a first processor, communicatively connected to the first protocol unit and the second protocol unit, and configured to perform the charging method according to any one of the foregoing implementations.

It may be understood that technical effects obtained in the second aspect are similar to technical effects obtained by using corresponding technical means in the first aspect. Details are not described herein again.

### BRIEF DESCRIPTION OF DRAWINGS

FIG. 1 is a diagram of a connection between a power consumption device and a power supply device according to an embodiment of this application;
FIG. 2 is a diagram of structures of a power consumption device and a power supply device according to an embodiment of this application;
FIG. 3A to FIG. 3C are diagrams of priorities of a first protocol and a second protocol according to an embodiment of this application;
FIG. 4 is a flowchart of a charging method according to an embodiment of this application;
FIG. 5 is a flowchart of a charging method according to another embodiment of this application;
FIG. 6 is a flowchart of a charging method according to still another embodiment of this application;
FIG. 7 is a flowchart of a charging method according to yet another embodiment of this application;
FIG. 8 is a diagram of a structure of a power consumption device according to an embodiment of this application; and
FIG. 9 is a diagram of a structure of a terminal device according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that, the described embodiments are merely a part rather than all of embodiments of this application. All other embodiments obtained by a person of ordinary skill in the art based on embodiments of this application without creative efforts shall fall within the protection scope of this application.

The term "and/or" in this application describes an association relationship for describing associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

"A plurality of" in this application means two or more. In addition, it should be understood that in description of this application, terms such as "first" and "second" are merely used for distinguishing and description, but should not be understood as indicating or implying relative importance, or should not be understood as indicating or implying a sequence.

In the descriptions of embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

With development and popularization of electronic devices, people use the electronic devices more frequently. Currently, an electronic device that needs to be charged (referred to as a power consumption device below) may establish a communication connection to a power supply device, and control the power supply device to charge the power consumption device according to a charging protocol.

However, when both the power consumption device and the power supply device support a plurality of charging protocols, the power consumption device may control, as required in a charging process , the power supply device to switch the charging protocol. For example, the power consumption device may control, according to a preset rule, the power supply device to switch a current charging protocol to a charging protocol with higher charging power to proceed charging. How the power consumption device implements collaborative management of the plurality of charging protocols (for example, whether to perform charging protocol switching, when to perform charging protocol switching, and how to perform charging protocol switching) is a problem to be resolved. For example, in some scenarios, the power supply device may have matched a changed charging protocol under control of the power consumption device, and adjusts output to the power consumption device according to the changed charging protocol, but the power consumption device has not matched the changed charging protocol. Consequently, charging of the power supply device for the power consumption device is affected. Apparently, if collaborative management of the plurality of charging protocols cannot be implemented, a charging speed of the power consumption device may not meet a use requirement of a user, resulting in poor user experience.

Therefore, embodiments of this application provide a charging method and a power consumption device, to implement collaborative management of the plurality of charging protocols, reduce a case in which the power consumption device does not match the changed charging protocol in time, and improve user experience.

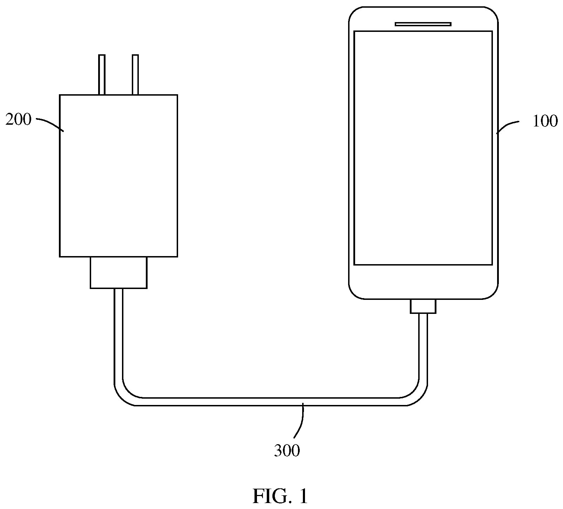

FIG. 1 is a diagram of a connection between a power consumption device 100 and a power supply device 200 according to an embodiment of this application. The power consumption device 100 is connected to the power supply device 200 through a cable 300. The power supply device 200 may charge the power consumption device 100 through the cable 300.

It may be understood that, in this embodiment of this application, both the power consumption device 100 and the power supply device 200 support a plurality of charging protocols. Correspondingly, the cable 300 may form a plurality of communication channels, and each communication channel may support a corresponding charging protocol. In this way, the power consumption device 100 and the power supply device 200 may establish a communication connection through a corresponding communication channel, and the power supply device 200 may charge the power consumption device 100 according to a charging protocol corresponding to the communication channel.

It may be understood that, in this embodiment of this application, the power consumption device 100 may include a battery (not shown in the figure). The power supply device 200 may be an electronic device that has a function of obtaining power from the outside and supplying the power to the battery of the power consumption device 100, or a function of supplying power to the battery of the power consumption device 100 by using stored electric energy of the power supply device 200. For example, the power consumption device 100 may be a terminal device. The power supply device 200 may be but is not limited to a power adapter, a mobile power supply, and a terminal device. In other words, both the power consumption device 100 and the power supply device 200 may be terminal devices. The terminal device may be, but is not limited to, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. This is not particularly limited in embodiments of this application.

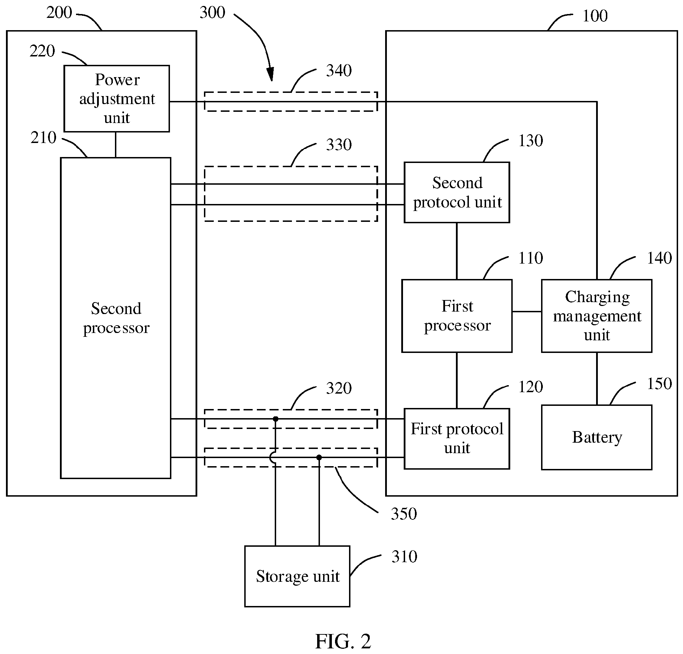

FIG. 2 is a diagram of specific structures of the power consumption device 100 and the power supply device 200 shown in FIG. 1.

In embodiments of this application, both the power consumption device 100 and the power supply device 200 support the plurality of charging protocols. For ease of description, the following uses an example in which both the power consumption device 100 and the power supply device 200 support a first protocol and a second protocol for description. The first protocol may be a charging protocol supported by a plurality of manufacturers and power consumption devices 100 of a plurality of specifications, and universality of the second protocol is less than universality of the first protocol. For example, the first protocol may be, but is not limited to, a USB-PD protocol. The second protocol may be, but is not limited to, a public protocol such as a QC protocol or a UFCS protocol, or a private charging protocol of a manufacturer. The power consumption device 100 may identify or determine whether the power supply device 200 supports the first protocol and the second protocol. A priority of identifying, by the power consumption device 100, whether the power supply device 200 supports the first protocol is higher than a priority of identifying, by the power consumption device 100, whether the power supply device 200 supports the second protocol.

As shown in FIG. 2, the power consumption device 100 includes a first processor 110, a first protocol unit 120, a second protocol unit 130, a charging management unit 140, and a battery 150. The first protocol unit 120 is configured to enable the power consumption device 100 to support the first protocol, and the second protocol unit 130 is configured to enable the power consumption device 100 to support the second protocol. The first processor 110 may be in a communication connection to the first protocol unit 120, the second protocol unit 130, and the charging management unit 140 through a bus. The charging management unit 140 is electrically connected to the battery 150. The power supply device 200 includes a second processor 210 and a power adjustment unit 220. The second processor 210 is in a communication connection to the power adjustment unit 220 through a bus.

It may be understood that a type of the bus for implementing the communication connection is not limited in embodiments of this application. For example, a type of the bus may include but is not limited to an inter-integrated circuit (inter-integrated circuit, I2C) bus, a serial peripheral interface (serial peripheral interface, SPI), a universal asynchronous receiver transmitter (universal asynchronous receiver transmitter, UART), and the like.

As shown in FIG. 2, a connection is established between the power consumption device 100 and the power supply device 200 through a cable 300. For example, a first interface (not shown in the figure) is disposed on the power consumption device 100, a second interface (not shown in the figure) is disposed on the power supply device 200, and two ends of the cable 300 may be respectively connected to the first interface and the second interface, so that the power consumption device 100 is connected to the power supply device 200 through the cable 300.

It may be understood that, in this embodiment of this application, the first interface includes a first pin unit A (not shown in the figure), and the second interface includes a first pin unit B (not shown in the figure). The first pin unit A is connected to the first protocol unit 120, and the first pin unit B is connected to the second processor 210. In addition, the first pin unit A may be connected to the first pin unit B through the cable 300, to establish an electrical connection between the first protocol unit 120 and the second processor 210, and form a first channel 320. In this way, the power consumption device 100 and the power supply device 200 may establish a first protocol-based communication connection through the first channel 320.

It may be understood that the first interface includes a second pin unit A (not shown in the figure), and the second interface includes a second pin unit B (not shown in the figure). The second pin unit A is connected to the second protocol unit 130, and the second pin unit B is connected to the second processor 210. In addition, the second pin unit A may be connected to the second pin unit B through the cable 300, to establish an electrical connection between the second protocol unit 130 and the second processor 210, and form a second channel 330. In this way, the power consumption device 100 and the power supply device 200 may establish a second protocol-based communication connection through the second channel 330.

It may be understood that the first interface includes a third pin unit A (not shown in the figure), and the second interface includes a third pin unit B (not shown in the figure). The third pin unit A is connected to the charging management unit 140, and the third pin unit B is connected to the power adjustment unit 220. In addition, the third pin unit A may be further connected to the third pin unit B through the cable 300, to establish an electrical connection between the power adjustment unit 220 and the charging management unit 140, and form a third channel 340. In this way, the power supply device 200 may charge the power consumption device 100 through the third channel 340.

It may be understood that, in some embodiments, a storage unit 310 is disposed in the cable 300. The storage unit 310 may be an electronic label or a chip (IC), and is configured to store E-mark (electronically mark) information, that is, through-current capability information of the cable 300. The through-current capability information may include, but is not limited to, a maximum current that can pass through the cable 300 and/or a maximum voltage at which the cable 300 can operate. It may be understood that a through-current capability of the cable 300 that includes the storage unit 310 is higher than a through-current capability of the cable 300 that does not include the storage unit 310.

It may be understood that, when the cable 300 includes the storage unit 310, the first interface includes a fourth pin unit A (not shown in the figure), and the second interface includes a fourth pin unit B (not shown in the figure). The fourth pin unit A is connected to the first protocol unit 120, and the fourth pin unit B is connected to the second processor 210. In addition, the fourth pin unit A may be further connected to the fourth pin unit B through the cable 300, to establish an electrical connection between the first protocol unit 120, the second processor 210, and the storage unit 310, and form a fourth channel 350. In this way, both the power consumption device 100 and the power supply device 200 may supply power to the storage unit 310 through the fourth channel 350. In addition, when both the power consumption device 100 and the power supply device 200 support the first protocol, for example, the USB-PD protocol, and the power consumption device 100 and the power supply device 200 supply power to the storage unit 310 through the fourth channel 350, in a stipulation of the first protocol, the power consumption device 100 and the power supply device 200 become power supply parties of the storage unit. Then, both the power consumption device 100 and the power supply device 200 may obtain the through-current capability information (namely, E-mark information) of the cable 300 from the storage unit 310 through the first channel 320.

It may be understood that, in this embodiment of this application, quantities and types of pins in the first pin unit A, the first pin unit B, the second pin unit A, the second pin unit B, the third pin unit A, the third pin unit B, the fourth pin unit A, and the fourth pin unit B are not limited. It only needs to be ensured that the power consumption device 100 and the power supply device 200 can establish a connection by using a corresponding pin unit and form a corresponding channel. For example, as shown in FIG. 2, the first pin unit A may include one pin, and the first pin unit B may include one pin. For example, the first pin unit A may include a CC pin, and the first pin unit B may include a CC pin. A connection may be established between a CC pin of the power consumption device 100 and a CC pin of the power supply device 200 through the cable 300, to implement the electrical connection between the first protocol unit 120 and the second processor 210.

For another example, the second pin unit A may include two pins, and the second pin unit B may include two pins. For example, the second pin unit A may include a D+ pin and a D- pin, and the second pin unit B may include a D+ pin and a D- pin. A connection may be established between a D+ pin of the power consumption device 100 and a D+ pin of the power supply device 200 through the cable 300, and a connection may be established between a D- pin of the power consumption device 100 and a D- pin of the power supply device 200 through the cable 300, to implement the electrical connection between the second protocol unit 130 and the second processor 210.

For another example, the third pin unit A may include one pin, and the third pin unit B may include one pin. For example, the third pin unit A may include a VBUS pin, and the third pin unit B may include a VBUS pin. A connection may be established between a VBUS pin of the power consumption device 100 and a VBUS pin of the power supply device 200 through the cable 300, to implement the electrical connection between the power adjustment unit 220 and the charging management unit 140.

For another example, the fourth pin unit A may include one pin, and the fourth pin unit B may include one pin. For example, the fourth pin unit A may include a VCONN pin, and the fourth pin unit B may include a VCONN pin. An electrical connection may be established between a VCONN pin of the power consumption device 100 and a VCONN pin of the power supply device 200 through the cable 300, and an electrical connection may be established between the storage unit 310 and each of the VCONN pin of the power consumption device 100 and the VCONN pin of the power supply device 200 through the cable 300. In this way, the power consumption device 100 and the power supply device 200 may respectively supply power to the storage unit 310 in the cable 300 through the fourth pin unit A (for example, the VCONN pin) and the fourth pin unit B (for example, the VCONN pin), and respectively obtain the through-current capability information (namely, the E-mark information) of the cable 300 from the storage unit 310 through the first pin unit A (for example, the CC pin) and the first pin unit B (for example, the CC pin).

The following describes in detail functions of elements in the power consumption device 100 and an operating principle of controlling the power supply device 200 to charge the power consumption device 100.

In the power consumption device 100, the first processor 110 is configured to determine whether the power consumption device 100 is connected to the power supply device 200 through the cable 300. Certainly, in this embodiment of this application, a manner in which the first processor 110 determines whether the power consumption device 100 is connected to the power supply device 200 through the cable 300 is not specifically limited. For example, the first processor 110 may determine, using the first protocol unit 120, whether the power consumption device 100 is connected to the power supply device 200 through the cable 300. Specifically, the first protocol unit 120 may determine, over the first channel 320, whether the power consumption device 100 is connected to the power supply device 200 through the cable 300. For example, a pull-up resistor or a pull-down resistor may be disposed on the first channel 320. The first protocol unit 120 detects a level change of the first pin unit A (for example, the CC pin), so that the first processor 110 determines whether the power consumption device 100 is connected to the power supply device 200 through the cable 300.

In some scenarios, the first protocol unit 120 may detect the level change of the first pin unit A, and determine whether the level change of the first pin unit A meets a preset rule. When the first protocol unit 120 determines that the level change of the first pin unit A meets the preset rule, the first protocol unit 120 may determine that the power consumption device 100 is connected to the power supply device 200 through the cable 300. It may be understood that the first protocol unit 120 is further configured to: after determining that the power consumption device 100 is connected to the power supply device 200 through the cable 300, output reminder information to the first processor 110, to notify the first processor 110 that the power consumption device 100 is connected to the power supply device 200 through the cable 300. In this way, in some embodiments, the first processor 110 may determine, based on the received reminder information, that the power consumption device 100 is connected to the power supply device 200 through the cable 300.

In some other scenarios, the first protocol unit 120 may detect the level change of the first pin unit A, and output a detection result to the first processor 110. The first processor 110 is configured to determine, based on the received detection result, whether the level change of the first pin unit A meets the preset rule. When the first processor 110 determines that the level change of the first pin unit A meets the preset rule, the first processor 110 may determine that the power consumption device 100 is connected to the power supply device 200 through the cable 300.

It may be understood that, in this embodiment of this application, the first processor 110 is further configured to: after determining that the power consumption device 100 is connected to the power supply device 200 through the cable 300, determine whether the power supply device 200 supports the first protocol.

It may be understood that, in this embodiment of this application, a manner in which the first processor 110 determines whether the power supply device 200 supports the first protocol is not specifically limited. For example, the first processor 110 may determine, using the first protocol unit 120, whether the power supply device 200 supports the first protocol.

For example, in a first scenario, after the power consumption device 100 is connected to the power supply device 200 through the cable 300, the second processor 210 outputs power supply capability information corresponding to the first protocol to the first protocol unit 120 through the first channel 320. The first protocol unit 120 is configured to: receive the power supply capability information through the first channel 320, and decode the power supply capability information. The first protocol unit 120 is configured to output decoded power supply capability information to the first processor 110. The first processor 110 is configured to: after receiving the power supply capability information, determine whether the power supply capability information can be identified. When the first processor 110 receives the decoded power supply capability information and determines that the power supply capability information can be identified, the first processor 110 may determine that the power supply device 200 supports the first protocol. However, when the first processor 110 receives the decoded power supply capability information and determines that the power supply capability information cannot be identified, or when the first processor 110 does not receive, within preset time, the decoded power supply capability information output by the first protocol unit 120, the first processor 110 may determine that the power supply device 200 does not support the first protocol.

It may be understood that, when the power supply device 200 supports a charging protocol (for example, the first protocol), the power supply device 200 may output preset power supply capability information corresponding to the charging protocol (for example, the first protocol) to the power consumption device 100. The power supply capability information corresponds to an electrical parameter that is output by the power supply device 200 to the power consumption device 100 when the power supply device 200 charges the power consumption device 100 according to the charging protocol (for example, the first protocol). The electrical parameter may include but is not limited to a current value, a voltage value, a power value, and the like. The power supply capability information may include but is not limited to a current value, a voltage value, and the like that are output to the power consumption device 100 when the power supply device 200 charges the power consumption device 100 according to the charging protocol (for example, the first protocol).

It may be understood that the power supply capability information may be a specific value, for example, a voltage of 20 V and a current of 8 A, or may be a value range, for example, a voltage of 18 V to 20 V and a current of 5 A to 8 A. This is not specifically limited in embodiments of this application.

It may be understood that both the power consumption device 100 and the power supply device 200 may determine whether the power consumption device 100 is connected to the power supply device 200 through the cable 300. After the power consumption device 100 determines that the power consumption device 100 is connected to the power supply device 200 through the cable 300, the power consumption device 100 may start timing at a preset time point, and determine whether timing time reaches preset time.

In a second scenario, after the power consumption device 100 is connected to the power supply device 200 through the cable 300, the first processor 110 outputs first identification information corresponding to the first protocol to the first protocol unit 120. The first protocol unit 120 encodes the received first identification information, and outputs encoded first identification information to the power supply device 200 through the first channel 320. Correspondingly, the second processor 210 of the power supply device 200 may receive the encoded first identification information through the first channel 320, and decode the encoded first identification information. When the second processor 210 can identify decoded first identification information, the second processor 210 may output first feedback information to the power consumption device 100 through the first channel 320, so that the power consumption device 100 learns that the power supply device 200 can support the first protocol. For example, after the first protocol unit 120 receives, through the first channel 320, the first feedback information output by the power supply device 200, the first protocol unit 120 decodes the received first feedback information, and outputs decoded first feedback information to the first processor 110. After the first processor 110 receives the decoded first feedback information and determines that the decoded first feedback information can be identified, the first processor 110 may determine that the power supply device 200 supports the first protocol. However, when the first processor 110 receives the decoded first feedback information and determines that the first feedback information cannot be identified, or when the first processor 110 does not receive, within preset time, the decoded first feedback information output by the first protocol unit 120, the first processor 110 may determine that the power supply device 200 does not support the first protocol.

It may be understood that, in the foregoing second scenario, after determining that the power supply device 200 supports the first protocol, the first processor 110 may obtain, from the power supply device 200 through the first channel 320 and the first protocol unit 120, the power supply capability information that is of the power supply device 200 and that corresponds to the first protocol.

It may be understood that, in this embodiment of this application, the first interface may be set to adapt to the first protocol, and the second interface may be set to adapt to the first protocol. For example, the first interface may be a Type-C interface, the second interface may be a Type-C interface or a Type-A interface, and both the first interface and the second interface may adapt to the first protocol (for example, the USB-PD protocol). In this way, when the power consumption device 100 is connected to the power supply device 200 through the cable 300, it may be determined that the power supply device 200 can charge the power consumption device 100 according to the first protocol. Therefore, a case in which the power supply device 200 cannot support the first protocol may be excluded. In other words, in this embodiment of this application, the first processor 110 may determine that the power supply device 200 supports the first protocol. In another case, when the first processor 110 determines that the power supply device 200 does not support the first protocol, in a scenario, the first processor 110 is configured to: determine whether the power supply device 200 supports the second protocol, and when determining that the power supply device 200 supports the second protocol, control the power supply device 200 to charge the power consumption device according to the second protocol. In another scenario, the first processor 110 is configured to control the power supply device 200 to charge the power consumption device 100 based on a preset charging parameter.

The preset charging parameter may include but is not limited to a current, a voltage, power, and the like. For example, the preset charging parameter may be a voltage of 5 V and a current of 2 A. In some scenarios (for example, the foregoing first scenario), after it is determined that the power consumption device 100 is connected to the power supply device 200 through the cable 300, the second processor 210 controls the power adjustment unit 220 to adjust output to the power consumption device 100, so that output of the power adjustment unit 220 to the charging management unit 140 meets the preset charging parameter.

It may be understood that, in the foregoing first scenario, the time point at which the power consumption device 100 starts timing is not limited. For example, after it is determined that the power consumption device 100 is connected to the power supply device 200 through the cable 300, the second processor 210 of the power supply device 200 controls the power adjustment unit 220 to adjust the output to the power consumption device 100, so that output of the power adjustment unit 220 to the charging management unit 140 meets the preset charging parameter. The charging management unit 140 of the power consumption device 100 may receive output of the power adjustment unit 220. The charging management unit 140 is configured to: detect an electrical parameter of a signal input to the charging management unit 140, and output a detection result to the first processor 110. The first processor 110 is configured to determine whether the received detection result meets the preset charging parameter, and is configured to start timing when determining that the received detection result meets the preset charging parameter.

It may be understood that charging power at which the power supply device 200 charges the power consumption device 100 based on the preset charging parameter is lower than charging power at which the power supply device 200 charges the power consumption device 100 according to the first protocol. When the first processor 110 determines that the power supply device 200 does not support the first protocol, and does not determine whether the power supply device 200 supports the second protocol, the power consumption device 100 may perform charging based on the preset charging parameter. This can shorten time for completing charging by the power consumption device 100, and improve user experience.

It may be understood that, when determining that the power supply device 200 supports the first protocol, the first processor 110 is configured to control the charging management unit 140 according to the first protocol, so that the charging management unit 140 adjusts output to the battery 150, and the output of the charging management unit 140 to the battery 150 meets a stipulation of the first protocol. In this way, the power consumption device 100 is controlled to match the first protocol. In this embodiment of this application, a manner in which the first processor 110 controls the power consumption device 100 to match the first protocol is not specifically limited. For example, when determining that the power supply device 200 supports the first protocol, the first processor 110 may output first management information to the charging management unit 140 according to the first protocol. The charging management unit 140 is configured to: receive the first management information, and adjust an internal parameter of the charging management unit 140 based on the first management information, so that the charging management unit 140 runs in a first mode. In this case, when the charging management unit 140 runs in the first mode, an input parameter of the battery 150 may meet the stipulation of the first protocol. In other words, the power consumption device 100 matches the first protocol.

It may be understood that specific content of the internal parameter is not limited in this embodiment of this application. For example, the internal parameter may include, but is not limited to, a power adjustment ratio, a duty cycle, and the like. After adjusting the internal parameter of the charging management unit 140, the charging management unit 140 may adjust a signal input to the charging management unit 140. A signal output by the charging management unit 140 to the battery 150 is an adjusted signal.

It may be understood that content of the first management information is not specifically limited in embodiments of this application. For example, in the first scenario, the first management information may be a target value of the internal parameter of the charging management unit 140. Correspondingly, when receiving the first management information, the charging management unit 140 may adjust the internal parameter of the charging management unit 140 to be the same as a target value in the first management information, so that an output parameter of the charging management unit 140 is adjusted to meet the stipulation of the first protocol.

For another example, in the second scenario, the first management information may be a target value of the output parameter of the charging management unit 140. Correspondingly, when receiving the first management information, the charging management unit 140 may directly adjust the output parameter of the charging management unit 140 to be the same as the target value in the first management information, to meet the stipulation of the first protocol.

It may be understood that, in this embodiment of this application, the charging management unit 140 is further configured to detect the electrical parameter of the signal input to the charging management unit 140, namely, an input parameter of the charging management unit 140. The first processor 110 is further configured to obtain the input parameter from the charging management unit 140, to determine a running mode of the charging management unit 140. In this way, when the first management information is the target value of the output parameter of the charging management unit 140, that is, in the foregoing second scenario, the charging management unit 140 may calculate the target value of the internal parameter based on the target value of the output parameter and the input parameter obtained through detection, and adjust the internal parameter to be the same as the target value obtained through calculation. When the internal parameter of the charging management unit 140 is the same as the target value obtained through calculation, the output parameter of the charging management unit 140 is equal to the first management information, so that the output of the charging management unit 140 to the battery 150 meets the stipulation of the first protocol.

It should be noted that an electrical parameter of a signal input to an apparatus, a unit, or a module is an input parameter of the apparatus, the unit, or the module. An electrical parameter of a signal output by an apparatus, a unit, or a module is an output parameter of the apparatus, the unit, or the module. For example, a voltage value in the output parameter of the charging management unit 140 may be equal to a product of a voltage value in an output parameter of the power adjustment unit 220 and a power adjustment ratio in the internal parameter of the charging management unit 140. The charging management unit 140 may change a power adjustment ratio of the charging management unit 140, to adjust the output to the battery 150. For example, when the voltage value in the output parameter of the power adjustment unit 220 is 20 V, and a voltage value that is in the input parameter of the battery 150 and that is specified in the first protocol is 10 V, the charging management unit 140 may adjust the voltage adjustment ratio in the internal parameter to 50%, so that the output parameter of the charging management unit 140 is (20 V*50%), that is, 10 V. Therefore, the output of the charging management unit 140 to the battery 150 meets the stipulation of the first protocol.

It may be understood that, in this embodiment of this application, specific content of the target value of the internal parameter or the output parameter of the charging management unit 140 in the first management information is not specifically limited. For example, in the first management information, the target value of the internal parameter or the output parameter of the charging management unit 140 may be a value that the internal parameter or the output parameter of the charging management unit 140 needs to reach when the charging management unit 140 runs in the first mode. For another example, in the first management information, the target value of the internal parameter or the output parameter of the charging management unit 140 may be a parameter obtained by the first processor 110 through calculation based on the through-current capability information of the cable 300 and the power supply capability information corresponding to the first protocol.

It may be understood that, when determining that the power supply device 200 supports the first protocol, the first processor 110 is further configured to control the power supply device 200 to charge the power consumption device 100 according to the first protocol. In this embodiment of this application, a manner in which the first processor 110 controls the power supply device 200 to charge the power consumption device 100 according to the first protocol is not specifically limited. For example, in a scenario, after determining that the power supply device 200 supports the first protocol, the first processor 110 may output a first instruction to the first protocol unit 120. The first protocol unit 120 encodes the first instruction according to the first protocol, and outputs an encoded first instruction to the power supply device 200 through the first channel 320. The first instruction instructs the power supply device 200 to charge the power supply device 200 according to the first protocol. Correspondingly, when receiving the encoded first instruction through the first channel 320, the second processor 210 may decode and analyze the received first instruction. Then, the second processor 210 may determine, by analyzing a decoded first instruction, that the power consumption device 100 needs to be charged according to the first protocol. In this way, the second processor 210 may control, according to the first protocol, the power adjustment unit 220 to adjust output to the charging management unit 140, to charge the power consumption device 100 according to the first protocol.

It may be understood that, in this embodiment of this application, the power adjustment unit 220 is configured to adjust the output to the charging management unit 140 in response to control of the second processor 210. In this embodiment of this application, a manner in which the power adjustment unit 220 adjusts the output to the charging management unit 140 is not limited. For example, the second processor 210 may output, based on a charging parameter corresponding to a charging protocol (for example, the first protocol), a duty cycle parameter corresponding to the charging protocol (for example, the first protocol) to the power adjustment unit 220. Then, the power adjustment unit 220 adjusts a duty cycle of the power adjustment unit 220 based on the received duty cycle parameter, to adjust the output to the charging management unit 140. For another example, the second processor 210 may output an adjustment instruction to the power adjustment unit 220 according to a selected charging protocol (for example, the first protocol). Then, the power adjustment unit 220 determines the selected charging protocol (for example, the first protocol) based on the adjustment instruction, and adjusts a duty cycle of the power adjustment unit 220 according to the selected charging protocol (for example, the first protocol), to adjust the output to the charging management unit 140. Correspondingly, when the power adjustment unit 220 of the power supply device 200 adjusts the output to the charging management unit 140, so that the output of the power adjustment unit 220 corresponds to the charging protocol (for example, the first protocol), the power supply device 200 can match the charging protocol (for example, the first protocol). It may be understood that the output of the power adjustment unit 220 is input to the battery 150 after passing through the charging management unit 140, to charge the battery 150.

It may be understood that, in this embodiment of this application, the first processor 110 is further configured to: when controlling the power supply device 200 to charge the power consumption device 100 according to the first protocol, determine whether the power supply device 200 supports the second protocol. In this embodiment of this application, a manner in which the first processor 110 determines whether the power supply device 200 supports the second protocol is not specifically limited. For example, in a scenario, the first processor 110 may determine, using the second protocol unit 130, whether the power supply device 200 supports the second protocol. A principle of determining, by the first processor 110 using the second protocol unit 130, whether the power supply device 200 supports the second protocol is similar to a principle of determining, by the first processor 110 using the first protocol unit 120, whether the power supply device 200 supports the first protocol. For details, refer to the description that the first processor 110 determines, using the first protocol unit 120, whether the power supply device 200 supports the first protocol. Details are not described herein again.

It may be understood that, in some scenarios, when the first processor 110 determines that the power supply device 200 does not support the second protocol, and the power supply device 200 supports the first protocol, the first processor 110 is configured to control the power supply device 200 to keep charging the power consumption device 100 according to the first protocol. In some other scenarios, when the first processor 110 determines that the power supply device 200 does not support the second protocol, and the power supply device 200 does not support the first protocol, the first processor 110 is configured to control the power supply device 200 to keep charging the power consumption device 100 based on the preset charging parameter.

It may be understood that, in this embodiment of this application, when the first processor 110 determines that the power supply device 200 supports the second protocol, the first processor 110 is further configured to:
disconnect a communication connection between the power consumption device 100 and the power supply device 200 on the first channel 320 at first time; and
control the power consumption device 100 to match the second protocol at second time, and control the power supply device 200 to charge the power consumption device 100 according to the second protocol.

The second time is later than the first time, and the first time and the second time are respectively a start time point and an end time point of a time interval. In this embodiment of this application, when the power consumption device 100 disconnects the communication connection between the power consumption device 100 and the power supply device 200 on the first channel 320, the first processor 110 may start timing, and determine, based on whether a timing result is greater than the time interval between the first time and the second time, whether a time process of protocol switching reaches the second time. In this embodiment of this application, duration of the time interval between the first time and the second time is not limited. For example, the time interval between the first time and the second time may be 1 second. For example, after the power consumption device 100 disconnects the communication connection between the power consumption device 100 and the power supply device 200 on the first channel 320, the first processor 110 may start timing, when timing time reaches 1 second, control the power consumption device 100 to match the second protocol, and control the power supply device 200 to charge the power consumption device 100 according to the second protocol.

It may be understood that disconnecting the communication connection between the power consumption device 100 and the power supply device 200 on the first channel 320 means disconnecting the first protocol-based communication connection between the power consumption device 100 and the power supply device 200, to control the power supply device 200 to stop charging the power consumption device 100 according to the first protocol. In this embodiment of this application, a manner of disconnecting the first protocol-based communication connection between the power consumption device 100 and the power supply device 200 is not limited. For example, the first processor 110 may disconnect the communication connection between the first processor 110 and the first protocol unit 120. After determining that the communication connection between the first protocol unit 120 and the first processor 110 is disconnected, the first protocol unit 120 may disconnect the communication connection to the power supply device 200 on the first channel 320 based on a state machine communication timeout reset mechanism of a protocol layer of the first protocol unit 120. For another example, the first processor 110 may output a control instruction to the first protocol unit 120, to instruct the first protocol unit 120 to disconnect the communication connection to the power supply device 200 on the first channel 320.

It may be understood that, when the communication connection between the power consumption device 100 and the power supply device 200 on the first channel 320 is disconnected, and the power supply device 200 does not receive a second instruction output by the power consumption device 100 according to the second protocol, the second processor 210 disconnects any charging protocol (for example, the first protocol and the second protocol)-based communication connection (for example, the first channel 320 and the second channel 330) to the power consumption device 100. Then, the second processor 210 adjusts the output of the power adjustment unit 220, so that the output parameter of the power adjustment unit 220 is equal to the preset charging parameter. Charging power at which the power supply device 200 charges the power consumption device 100 based on the preset charging parameter is lower than charging power at which the power supply device 200 charges the power consumption device 100 according to the second protocol.

Correspondingly, in this embodiment of this application, in a scenario in which the output parameter of the power adjustment unit 220 is equal to the preset charging parameter, the charging management unit 140 is configured to: detect the input parameter of the power adjustment unit 220, and when a detection result is that the input parameter is equal to the preset charging parameter, adjust the internal parameter of the power adjustment unit 220, to adjust output of the charging management unit to the battery 150. In addition, in response to that the power consumption device 100 disconnects the communication connection to the power supply device 200 on the first channel 320, the charging management unit 140 runs in a preset mode under control of the first processor 110. In the preset mode, the charging management unit 140 is configured to adjust the output to the battery 150, so that the output of the charging management unit 140 to the battery 150 meets the preset charging parameter. That is, when the power supply device 200 charges the power consumption device 100 based on the preset power supply parameter, the input parameter of the battery 150 may be equal to the preset charging parameter.

It may be understood that, in this embodiment of this application, a manner in which the charging management unit 140 adjusts the output to the battery 150, for the output to the battery 150 to meet the preset charging parameter is not specifically limited. For example, in some scenarios, the charging management unit 140 runs in the preset mode under control of the first processor 110. The first processor 110 may output preset management information to the charging management unit 140 at the first time or when determining that the power supply device 200 supports the second protocol and determining that the input parameter of the charging management unit 140 is equal to the preset charging parameter. The charging management unit 140 is configured to: receive the preset management information, and adjust the internal parameter of the charging management unit 140 based on the preset management information, so that the output of the charging management unit 140 to the battery 150 meets the preset charging parameter, that is, the charging management unit 140 runs in the preset mode.

It may be understood that, in this embodiment of this application, a principle of adjusting, by the charging management unit 140, the internal parameter based on the preset management information in the preset mode is similar to a principle of adjusting, by the charging management unit 140, the internal parameter based on the first management information in the first mode. For details, refer to the description that the charging management unit 140 adjusts the internal parameter based on the first management information in the first mode. Details are not described herein again.

For another example, in some other scenarios, after detecting the input parameter, the charging management unit 140 may determine whether the input parameter is equal to the preset charging parameter. When the charging management unit 140 determines that the input parameter is equal to the preset charging parameter, the charging management unit 140 adjusts the internal parameter to a value corresponding to the preset charging parameter, so that the output of the charging management unit 140 meets the preset charging parameter, and the charging management unit 140 runs in the preset mode. For example, when the charging management unit 140 determines that the input parameter is equal to the preset charging parameter, the charging management unit 140 adjusts the voltage adjustment ratio in the internal parameter to 1, so that the output parameter of the charging management unit 140 is equal to the output parameter of the power adjustment unit 220, that is, equal to the preset voltage parameter. In this case, the battery 150 is charged based on the preset voltage parameter.

It may be understood that, in this embodiment of this application, a manner in which the first processor 110 controls the power consumption device 100 to match the second protocol is not specifically limited. For example, the first processor 110 may output second management information to the charging management unit 140 at the second time according to the second protocol. The charging management unit 140 is configured to: receive the second management information, and adjust the internal parameter of the charging management unit 140 based on the second management information, so that the charging management unit 140 runs in a second mode. In this case, when the charging management unit 140 runs in the second mode, the input parameter of the battery 150 may meet a stipulation of the second protocol. In other words, the power consumption device 100 matches the second protocol.

It may be understood that a principle in which the charging management unit 140 runs in the second mode based on the second management information is similar to a principle in which the charging management unit 140 runs in the first mode based on the first management information. For details, refer to the description that the charging management unit 140 runs in the first mode based on the first management information. Details are not described herein again.

It may be understood that, in this embodiment of this application, the first mode, the second mode, and the preset mode may respectively correspond to target values of different internal parameters or output parameters. In other words, content of the first management information, the second management information, and the preset management information is different.

It may be understood that, in this embodiment of this application, a manner in which the first processor 110 controls the power supply device 200 to charge the power consumption device 100 according to the second protocol is not specifically limited. For example, the first processor 110 may output the second instruction to the power supply device 200 through the second protocol unit 130, to instruct the power supply device 200 to charge the power consumption device 100 according to the second protocol. For details, refer to a manner in which the first processor 110 controls the power supply device 200 to charge the power consumption device 100 according to the first protocol. Details are not described herein again.

It should be noted that, when the power supply device 200 charges the power consumption device 100 according to the first protocol or the second protocol, the power supply device 200 charges the power consumption device 100 in a fast charging manner. When the power supply device 200 does not charge the power consumption device 100 in the fast charging manner, the power supply device 200 may charge the power consumption device 100 based on the preset charging parameter. In other words, the power supply device 200 may charge the power consumption device 100 after adjusting output in the power adjustment unit 220 to the preset charging parameter. Charging power at which the power supply device 200 charges the power consumption device 100 based on the preset charging parameter is less than charging power at which the power supply device 200 charges the power consumption device 100 in the fast charging manner. In other words, at least some parameters in the preset charging parameter are less than at least some parameters in the power supply capability information corresponding to the charging protocol (for example, the first protocol and the second protocol). In addition, it should be noted that, in this embodiment of this application, the charging power at which the power supply device 200 charges the power consumption device 100 according to the second protocol is greater than the charging power at which the power supply device 200 charges the power consumption device 100 according to the first protocol. In this way, after the first processor 110 determines that the power supply device 200 supports the second protocol, the first processor 110 controls the power supply device 200 to charge the power consumption device 100 according to the second protocol. This can increase charging power for the power consumption device 100, shorten charging time, and improve user experience.

It may be understood that, as described above, in this embodiment of this application, the first protocol unit 120 and the second protocol unit 130 are independently disposed. Certainly, in another embodiment, the first protocol unit 120 and the second protocol unit 130 may alternatively be integrated together. For example, in another embodiment, the first protocol unit 120 and the second protocol unit 130 may be integrated to form a protocol assembly unit (not shown in the figure). The protocol assembly unit may establish an electrical connection to the second processor 210 through the first channel 320, the second channel 330, and the third channel 340, and has all functions of the first protocol unit 120 and all functions of the second protocol unit 130.

It may be understood that, in this embodiment of this application, when the first protocol unit 120 and the second protocol unit 130 are integrated into the protocol assembly unit, and the communication connection between the power consumption device 100 and the power supply device 200 on the first channel 320 needs to be disconnected, a method for disconnecting the communication connection between the power consumption device 100 and the power supply device 200 on the first channel 320 is not specifically limited. Specifically, the power consumption device 100 may control, through the first processor 110, the protocol assembly unit to disconnect the communication connection to the second processor 210 of the power supply device 200 on the first channel 320, to disconnect the communication connection between the power consumption device 100 and the power supply device 200 on the first channel 320. For example, in a scenario, the first processor 110 may disconnect the first protocol-based communication connection to the protocol assembly unit, so that the protocol assembly unit disconnects the communication connection to the second processor 210 on the first channel 320 based on the state machine communication timeout reset mechanism of a protocol layer of the protocol assembly unit. Therefore, the power consumption device 100 is used to disconnect the communication connection to the power supply device 200 on the first channel 320. The first processor 110 may establish a communication connection to the protocol assembly unit through at least two communication channels, and the two communication channels respectively correspond to the first protocol and the second protocol.

For another example, in another scenario, the first processor 110 is configured to output a control instruction to the protocol assembly unit when the communication connection between the power consumption device 100 and the power supply device 200 on the first channel 320 needs to be disconnected. The control instruction instructs the protocol assembly unit to disconnect the communication connection on the first channel 320. The protocol assembly unit is configured to: receive the control instruction, and disconnect the communication connection to the second processor 210 on the first channel based on the control instruction, to disconnect the communication connection between the power consumption device 100 and the power supply device 200 on the first channel 320.

It may be understood that, in another embodiment, the first processor 110 is further configured to determine whether the cable 300 includes the storage unit 310. In this embodiment of this application, a manner in which the first processor 110 determines whether the cable 300 includes the storage unit 310 is not limited. For example, in some scenarios, the first processor 110 may determine, using the first protocol unit 120, whether the cable 300 includes the storage unit 310. Specifically, the first protocol unit 120 may determine, by detecting the level change of the first pin unit A (for example, the CC pin), whether the cable 300 includes the storage unit 310. For example, when the first protocol unit 120 determines that the level change of the first pin unit A (for example, the CC pin) meets the preset rule, the first protocol unit 120 may determine that the cable 300 includes the storage unit 310. Correspondingly, the first protocol unit 120 is further configured to: after determining that the cable 300 includes the storage unit 310, output corresponding prompt information to the first processor 110, to notify the first processor 110 that the cable 300 includes the storage unit 310.

It may be understood that, when the determining that the cable 300 includes the storage unit 310, the first processor 110 is further configured to control the first protocol unit 120 to supply power to the storage unit 310 through the fourth pin unit A, and obtain the through-current capability information (namely, E-mark information) of the cable 300 in the storage unit 310 using the first protocol unit 120.

In some embodiments, the power supply device 200 may identify whether the cable 300 includes the storage unit 310, and a manner in which the power supply device 200 identifies whether the cable 300 includes the storage unit 310 is the same as a manner in which the power consumption device 100 identifies whether the cable 300 includes the storage unit 310. Details are not described herein again.

It may be understood that, in this embodiment of this application, an occasion for identifying whether the cable 300 includes the storage unit 310 is not specifically limited. For example, when determining that the power consumption device 100 is connected to the power supply device 200 through the cable 300, the power consumption device 100 or the power supply device 200 may identify whether the cable 300 includes the storage unit 310. For another example, when determining that the power supply device 200 supports the first protocol, the power consumption device 100 or the power supply device 200 may identify whether the cable 300 includes the storage unit 310.

It may be understood that, in this embodiment of this application, a specific manner of obtaining the through-current capability information of the cable 300 in the storage unit 310 is not limited. For example, in some scenarios, after controlling the first protocol unit 120 to supply power to the storage unit 310, the first processor 110 may obtain the through-current capability information from the storage unit 310. Specifically, the first processor 110 may output the first change information to the second processor 210 using the first protocol unit 120 and the first channel 320. In response to receiving the first change information, the second processor 210 stops supplying power to the storage unit 310 through the fourth pin unit B, and outputs second change information to the first protocol unit 120 through the first channel 320. The first protocol unit 120 is configured to: after receiving the second change information, output the second change information to the first processor 110. In response to receiving the second change information by the first processor 110, the first processor 110 controls the first protocol unit 120 to supply power to the storage unit 310 through the fourth pin unit A. After the first protocol unit 120 supplies power to the storage unit 310, the first processor 110 may control the first protocol unit 120 to obtain the through-current capability information from the storage unit 310, and output the through-current capability information to the first processor 110.

It may be understood that, for example, the first protocol is the USB-PD protocol. The USB-PD protocol specifies that after the power consumption device 100 becomes a power supply party of the storage unit 310, the power consumption device 100 may obtain the through-current capability information from the storage unit 310. In this way, when the power consumption device 100 performs charging according to the USB-PD protocol or identifies whether the power supply device 200 supports the USB-PD protocol, the first processor 110 may control the first protocol unit 120 to supply power to the storage unit 310 through the fourth pin unit A (for example, the VCONN pin), so that the power consumption device 100 become a power supply party of the storage unit 310, and obtain the through-current capability information stored in the storage unit 310 through the first pin unit A (for example, the CC pin) according to the USB-PD protocol.

For another example, in some other scenarios, the first protocol unit 120 may directly supply power to the storage unit 310 without triggering control of the first processor 110, obtain the through-current capability information from the storage unit 310, and output the through-current capability information to the first processor 110. Specifically, the first protocol unit 120 may output the first change information, and output the prompt information to the first processor 110 when receiving the second change information, to prompt the first processor 110 that the cable 300 includes the storage unit 310. Then, the first protocol unit 120 supplies power to the storage unit 310 through the fourth pin unit A, and then obtains the through-current capability information from the storage unit 310 through the first pin unit A and outputs the through-current capability information to the first processor 110.

For another example, in some scenarios, due to signal interference caused by an external object or an insufficient computing capability of the second processor 210, the second processor 210 cannot identify the first change information after receiving the first change information, or the second processor 210 cannot output the second change information in time after receiving the first change information. Therefore, in some embodiments, if the first protocol unit 120 does not receive the second change information after outputting the first change information, the first protocol unit 120 may also directly supply power to the storage unit 310 through the fourth pin unit A, and then obtain the through-current capability information from the storage unit 310 through the first pin unit A. In other words, the first protocol unit 120 directly supplies power to the storage unit 310 without triggering the second change information, so that time from a moment at which the power consumption device 100 starts to be charged according to the first protocol to a moment at which the through-current capability information is obtained can be reduced. This avoids a case in which the power consumption device 100 fails to obtain the through-current capability information when the power supply device 200 charges the power consumption device 100 according to the second protocol.

Similarly, in another embodiment, after determining that the cable 300 includes the storage unit 310, the first protocol unit 120 may not output the first change information, but directly supply power to the storage unit 310 through the fourth pin unit A, and then obtain the through-current capability information from the storage unit 310 through the first pin unit A. In this way, time from starting charging of the power consumption device 100 according to the first protocol to obtaining the through-current capability information can be effectively reduced, and a case in which the power consumption device 100 fails to obtain the through-current capability information when the power supply device 200 charges the power consumption device 100 according to the second protocol can be avoided.

It may be understood that, after the first processor 110 determines that the power supply device 200 supports the second protocol, the first processor 110 is further configured to determine, based on the through-current capability information obtained by the first protocol unit 120, an actual charging parameter used when charging is performed according to the second protocol. In other words, when the power consumption device 100 controls the power supply device 200 to perform charging according to the second protocol, the first processor 110 needs to determine, based on the through-current capability information, whether the through-current capability of the cable 300 supports the power supply device 200 in charging the power consumption device 100 based on the power supply capability information corresponding to the second protocol. For example, the power consumption device 100 may compare the through-current capability information with the power supply capability information of the power supply device 200 corresponding to the second protocol, to determine whether a parameter in the through-current capability information is greater than or equal to a corresponding parameter in the power supply capability information.

When the first processor 110 determines that all parameters in the through-current capability information are greater than or equal to corresponding parameters in the power supply capability information, the first processor 110 may control the power supply device 200 to adjust output to meet the power supply capability information and charge the power consumption device 100. In this way, the power supply device 200 charges the power consumption device 100 according to the second protocol. For example, when the power supply capability information corresponding to the second protocol is a voltage of 20 V and a current of 8 A, and the through-current capability information of the cable 300 is a maximum voltage of 20 V and a maximum current of 8 A, the first processor 110 may control the power supply device 200 to charge the power consumption device 100 based on the power supply capability information (that is, the voltage is 20 V and the current is 8 A) corresponding to the second protocol.

When the first processor 110 determines that some or all parameters in the through-current capability information are less than some or all parameters in the power supply capability information corresponding to the second protocol, the first processor 110 is configured to replace an electrical parameter that is in the power supply capability information and that is greater than the through-current capability information with a corresponding electrical parameter in the through-current capability information, to obtain the actual charging parameter. Then, the first processor 110 is configured to output the actual charging parameter to the power supply device 200 through the second protocol unit 130 and the second channel 330, to indicate the power supply device 200 to charge the power consumption device 100 based on the actual charging parameter. For example, when the power supply capability information corresponding to the second protocol is the voltage of 20 V and the current of 8 A, and the through-current capability information of the cable 300 is a maximum voltage of 20 V and a maximum current of 5 A, the first processor 110 may replace 8 A in the power supply capability information with 5 A, to obtain the actual charging parameter with a voltage of 20 V and a current of 5 A. Then, the first processor 110 controls the power supply device 200 to charge the power consumption device 100 based on the actual charging parameters of the voltage of 20 V and the current of 5 A.

It may be understood that, as described above, in this embodiment of this application, the through-current capability information of the cable 300 is obtained, so that the charging power of the power consumption device 100 can be effectively increased, and user experience can be improved.

It may be understood that a specific occasion on which the first processor 110 outputs the actual charging parameter to the second processor 210 is not limited in this embodiment of this application. For example, the actual charging parameter and the second instruction may be output to the second processor 210 at the same time. Correspondingly, the second processor 210 may control, based on the charging protocol (for example, the second protocol) and the actual charging parameter, the power adjustment unit 220 to adjust the duty cycle of the power adjustment unit 220, so that the output of the power adjustment unit 220 meets a stipulation of the charging protocol (for example, the second protocol) and meets a limitation of the through-current capability of the cable 300. In addition, the first processor 110 may use the actual charging parameter obtained through calculation as a target value of the output parameter of the charging management unit 140, and record the target value in the second management information.

It may be understood that, in some other embodiments, when the cable 300 does not include the storage unit 310, or the power consumption device 100 does not complete obtaining of the through-current capability information before the second time, the first processor 110 is further configured to determine, based on the preset capability information, the actual charging parameter used when charging is performed according to the second protocol. The preset capability information may be the through-current capability information of the cable 300 when the cable 300 does not include the storage unit 310. The preset capability information may include, but is not limited to, a preset maximum current that can pass through the cable 300 and/or a preset maximum voltage at which the cable 300 can operate. When the cable 300 includes the storage unit 310, a parameter in the preset capability information is less than or equal to a corresponding parameter in the through-current capability information stored in the storage unit 310. In addition, when the cable 300 does not include the storage unit 310, or the power consumption device 100 does not complete obtaining of the through-current capability information before the second time, a parameter in the preset charging parameter is less than or equal to the corresponding parameter in the preset capability information. For example, the preset capability information may be a maximum voltage value of 10 V and a maximum current value of 3 A, and the preset charging parameter may be a voltage of 5 V and a current of 2 A.

It may be understood that, when the first processor 110 determines that the cable 300 does not include the storage unit 310, or when the power supply device 200 charges the power consumption device 100 according to the second protocol and the first processor 110 determines that obtaining of the through-current capability information is not completed, the first processor 110 may invoke the preset capability information to calculate the actual charging parameter. A location at which the preset capability information is stored is not specifically limited in this embodiment of this application. For example, the first processor 110 may be a processor integrated with a memory (not shown in the figure), and the preset capability information may be stored in the memory of the first processor 110.

It should be noted that, when the cable 300 does not include the storage unit 310, some or all parameters in the through-current capability information of the cable 300 are less than some or all parameters in the power supply capability information corresponding to the second protocol. Consequently, the cable 300 cannot support a possibility of charging the power consumption device 100 based on the power supply capability information corresponding to the second protocol. Even if some or all of through-current capabilities of the cable 300 are lower than some or all of parameters in the power supply capability information corresponding to the second protocol, the preset capability information of the cable 300 is still greater than or equal to the preset charging parameter. Therefore, when the cable 300 does not include the storage unit 310, the power consumption device 100 may calculate the actual charging parameter based on the preset capability information and the power supply capability information corresponding to the second protocol, and control the power supply device 200 to charge the power consumption device 100 based on the actual charging parameter. In this way, a probability that some or all of the actual charging parameters are greater than the through-current capability information of the cable 300 when the power consumption device 100 is charged according to the second protocol can be reduced, and safety of charging the power consumption device 100 can be improved while charging power of the power consumption device 100 is improved.

A principle in which the power consumption device 100 calculates the actual charging parameter based on the preset capability information and the power supply capability information corresponding to the second protocol, and controls the power supply device 200 to charge the power consumption device 100 based on the actual charging parameter is similar to or the same as a principle in which the power consumption device 100 calculates the actual charging parameter based on the preset capability information and the power supply capability information corresponding to the second protocol, and controls the power supply device 200 to charge the power consumption device 100 based on the actual charging parameter. For details, refer to the foregoing descriptions in which the power consumption device 100 calculates the actual charging parameter based on the preset capability information and the power supply capability information corresponding to the second protocol, and controls the power supply device 200 to charge the power consumption device 100 based on the actual charging parameter. Details are not described herein again.

It may be understood that when the power consumption device 100 is charged according to the charging protocol (for example, the first protocol and the second protocol), the first processor 110 may dynamically adjust the actual charging parameter based on a change of a capacity of the battery 150, and output the adjusted actual charging parameter to the power supply device 200, to control the power supply device 200 to charge the power consumption device 100 based on the adjusted actual charging parameter. For example, when the capacity of the battery 150 is less than 20%, the first processor 110 may increase the actual charging parameter based on a preset ratio, and control the power supply device 200 to charge the power consumption device 100 based on the increased actual charging parameter. For another example, when the capacity of the battery 150 is greater than 80%, the first processor 110 may reduce the actual charging parameter based on a preset ratio, and control the power supply device 200 to charge the power consumption device 100 based on the reduced actual charging parameter.

It may be understood that, in another embodiment, when the cable 300 includes the storage unit 310, information stored in the storage unit 310 may further include a type of the cable 300, a version number of the cable 300, and the like. The first processor 110 may obtain, using the first protocol unit 120, the information stored in the storage unit 310, to determine information such as the type of the cable 300. The type of the cable 300 may be classified based on an interface type adapted to the cable 300. For example, the type of the cable 300 may include but is not limited to Type-A, Type-C, Lightning, Micro-USB, and the like.

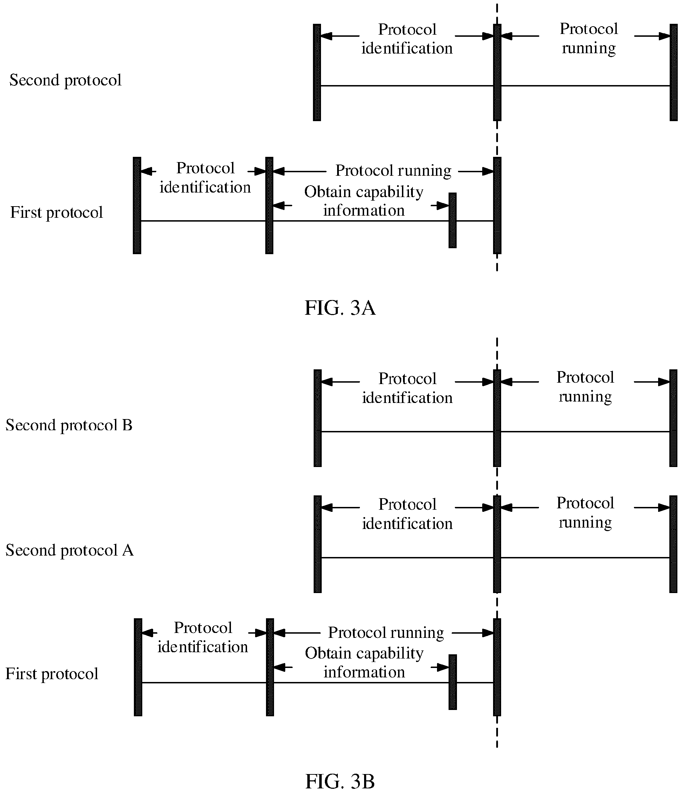

Refer to FIG. 3A. The following uses an example in which the cable 300 includes the storage unit 310 to describe in detail a principle in which the power consumption device 100 controls the power supply device 200 to charge the power consumption device 100.

First, the power consumption device 100 determines whether the power consumption device 100 is connected to the power supply device 200 through the cable 300. After determining that the power consumption device 100 establishes a connection to the power supply device 200 through the cable 300, the power consumption device 100 determines, using the first protocol unit 120, whether the power supply device 200 supports the first protocol (that is, identification of the first protocol). When determining that the power supply device 200 supports the first protocol, the power consumption device 100 adjusts the output to the battery 150 through the charging management unit 140, to implement matching of the first protocol, and outputs the first instruction to the power supply device 200 using the first protocol unit 120, to indicate the power supply device 200 to charge the power consumption device 100 according to the first protocol (that is, running of the first protocol).

When the power consumption device 100 is charged according to the first protocol (that is, during running of the first protocol), or when the power consumption device 100 identifies whether the power supply device 200 supports the first protocol (that is, during identification of the first protocol), the power consumption device 100 identifies, using the first protocol unit 120, that the cable 300 includes the storage unit 310, controls the first protocol unit 120 to supply power to the storage unit 310 through the fourth pin unit A, and obtains the through-current capability information of the cable 300 through the first pin unit A.

Then, when the power consumption device 100 is charged according to the first protocol, the power consumption device 100 determines, using the second protocol unit 130, whether the power supply device 200 supports the second protocol (that is, identification of the second protocol). When it is determined that the power supply device 200 supports the second protocol, the power consumption device 100 disconnects the communication connection between the first processor 110 and the first protocol unit 120 at the first time, to disconnect the communication connection between the power consumption device 100 and the power supply device 200 on the first channel 320. Correspondingly, in response to disconnection of the communication connection to the power consumption device 100 on the first channel 320, the power supply device 200 stops running of the first protocol, and adjusts the output of the power adjustment unit 220, to charge the power consumption device 100 based on the preset charging parameter. In addition, the power consumption device 100 adjusts the output to the battery 150 based on the preset charging parameter through the charging management unit 140, so that the power consumption device 100 is charged based on the preset charging parameter.

Before the second time, the power consumption device 100 adjusts the output to the battery 150 through the charging management unit 140, to implement matching of the second protocol. At the second time, the power consumption device 100 outputs the second instruction to the power supply device 200 through the second protocol unit 130, to indicate the power supply device 200 to charge the power consumption device 100 according to the second protocol, so that the power consumption device 100 is charged according to the second protocol (that is, running of the second protocol).

Apparently, in this embodiment of this application, the power consumption device 100 may be charged based on a specific requirement according to the first protocol, the second protocol, and the preset charging parameter, to implement coordinated management of a plurality of protocols. For example, when the power consumption device 100 needs to switch the charging protocol, for example, switch from the first protocol to the second protocol, the power consumption device 100 may first perform charging based on the preset charging parameter within a time interval between the first time and the second time, and then perform charging according to the second protocol. This provides sufficient time for the power consumption device 100 to complete matching of the second protocol.

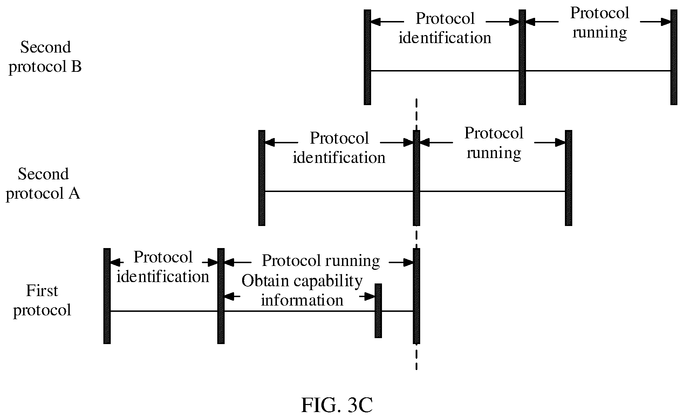

It may be understood that, in this embodiment of this application, a quantity of second protocols is not limited. For example, in another embodiment, there may be a plurality of second protocols. Correspondingly, when there are the plurality of second protocols, there are a plurality of second channels 330 between the power consumption device 100 and the power supply device 200, and the plurality of second protocols are in a one-to-one correspondence with the plurality of second channels 330. In addition, when there are the plurality of second protocols, priorities of identifying, by the power consumption device 100, whether the power supply device 200 supports the plurality of second protocols are not limited in this embodiment of this application. For example, as shown in FIG. 3B, the power consumption device 100 has a same priority of identifying the plurality of second protocols (for example, the second protocol A and the second protocol B). In other words, the power consumption device 100 may simultaneously identify, on the plurality of second channels 330, whether the power supply device 200 supports the plurality of second protocols. For another example, as shown in FIG. 3C, the priorities of identifying the plurality of second protocols by the power consumption device 100 may be different (for example, a priority of identifying the second protocol A is higher than a priority of identifying the second protocol B). In other words, the power consumption device 100 may sequentially identify whether the power supply device 200 supports the second protocol on the plurality of second channels 330 at a plurality of time points.

It may be understood that, as shown in FIG. 3B, when the power consumption device 100 has a same priority for identifying the plurality of second protocols, and determines that the quantity of second protocols supported by the power supply device 200 is greater than 1, the first processor 110 of the power consumption device 100 may calculate, based on the through-current capability information and a plurality of pieces of power supply capability information respectively corresponding to the plurality of second protocols, an actual charging parameter of the second protocols (for example, the second protocol A and the second protocol B) supported by the power supply device 200, and determine charging power of the second protocols supported by the power supply device 200 based on the actual charging parameter. Specifically, the first processor 110 may calculate charging power of the second protocols (for example, the second protocol A and the second protocol B) based on a current value and a voltage value in actual charging parameter corresponding to the second protocols (for example, the second protocol A and the second protocol B). The first processor 110 may compare a plurality of charging powers obtained through calculation, to determine a second protocol corresponding to a largest charging power. Then, the first processor 110 outputs the second instruction to the second processor 210 according to the second protocol corresponding to the largest charging power, and outputs management information to the charging management unit 140 according to the second protocol corresponding to the largest charging power. In this way, both the power consumption device 100 and the power supply device 200 match the second protocol corresponding to the largest charging power, and the power supply device 200 is controlled to charge the power consumption device 100 according to the second protocol corresponding to the largest charging power.

It may be understood that, as shown in FIG. 3C, when the power consumption device 100 has different priorities for identifying the plurality of second protocols, when the power consumption device 100 is charged according to one of the second protocols (for example, the second protocol A), it is determined that the power supply device 200 supports another second protocol (for example, the second protocol B). In this way, the first processor 110 of the power consumption device 100 may calculate, based on the through-current capability information and the power supply capability information corresponding to an identified second protocol, an actual charging parameter of the identified second protocol, and determine, based on the actual charging parameter, charging power corresponding to the second protocol. The first processor 110 may compare the charging power corresponding to the identified second protocol with charging power corresponding to a currently used second protocol, to determine the second protocol corresponding to the largest charging power. When the second protocol corresponding to the largest charging power is the currently used second protocol (for example, the second protocol A), the first processor 110 controls the power supply device 200 to maintain charging according to the currently used second protocol. When the second protocol corresponding to the largest charging power is not the currently used second protocol, the first processor 110 may switch the charging protocol, and control the power supply device 200 to charge the power consumption device 100 according to the second protocol corresponding to the largest charging power. A principle of switching the power consumption device 100 from charging according to the second protocol to charging according to the another second protocol is similar to a principle of switching the power consumption device 100 from charging according to the first protocol to charging according to the second protocol. For details, refer to the foregoing descriptions of switching the power consumption device 100 from charging according to the first protocol to charging according to the second protocol. Details are not described herein again.

It may be understood that, in this embodiment of this application, an occasion on which the power consumption device 100 obtains the through-current capability information of the cable 300 is not specifically limited. As shown in FIG. 3A to FIG. 3C, in some embodiments, the power consumption device 100 obtains the through-current capability information after the identifying the first protocol ends and when the first protocol runs. In another embodiment, the power consumption device 100 may obtain the through-current capability information in a process of identifying the first protocol.

Apparently, in this embodiment of this application, after determining that the power supply device 200 supports the first protocol, the power consumption device 100 controls the power supply device 200 to charge the power consumption device 100 according to the first protocol. After determining that the power supply device 200 supports the second protocol, the power consumption device 100 controls the power supply device 200 to change the charging protocol. Specifically, the power supply device 200 is first controlled to stop charging the power consumption device 100 according to the first protocol, charge the power consumption device 100 based on the preset charging parameter, and then switch to charging the power consumption device 100 according to the second protocol. In this way, when the power supply device 200 supports a plurality of charging protocols, the power consumption device 100 may implement collaborative management of the plurality of charging protocols. For example, when the power supply device 200 needs to switch the charging protocol from the first protocol to the second protocol, the power consumption device 100 first controls the power supply device 200 to charge the power consumption device 100 based on the preset charging parameter within preset time, to provide sufficient time for the power consumption device 100 to complete matching with the second protocol. Then, the power consumption device 100 controls the power supply device 200 to perform charging according to the second protocol. In this way, after it is identified that the power supply device 200 supports the second protocol, a time point at which the power consumption device 100 matches the second protocol is between a time point at which the power consumption device 100 stops charging according to the first protocol and a time point at which the power consumption device 100 starts charging according to the second protocol. This implements collaborative management of the time at which the power consumption device 100 switches the charging protocol and the time at which the power consumption device 100 matches the second protocol, reduces a probability that the power consumption device 100 does not match the second protocol when the power supply device 200 charges the power consumption device 100 according to the second protocol, improves a charging speed of the power consumption device 100, and improves user experience.

In addition, the power consumption device 100 may obtain the through-current capability information in the storage unit 310 when charging according to the first protocol and before charging according to the second protocol, so that before charging according to the second protocol, the power consumption device 100 may determine, based on the through-current capability of the cable 300, an actual charging parameter that can enable the charging power reach the highest when performing charging according to the second protocol, and finally perform charging based on the actual charging parameter corresponding to the highest charging power In this way, collaborative management of the time at which the power consumption device 100 obtains the through-current capability information and the start time at which the power consumption device 100 is charged according to the second protocol can be effectively implemented, thereby reducing a probability that the power consumption device 100 is charged at low power because the power consumption device 100 does not obtain the through-current capability information before being charged according to the second protocol. This further improves a charging speed of the power consumption device 100, and improves user experience.

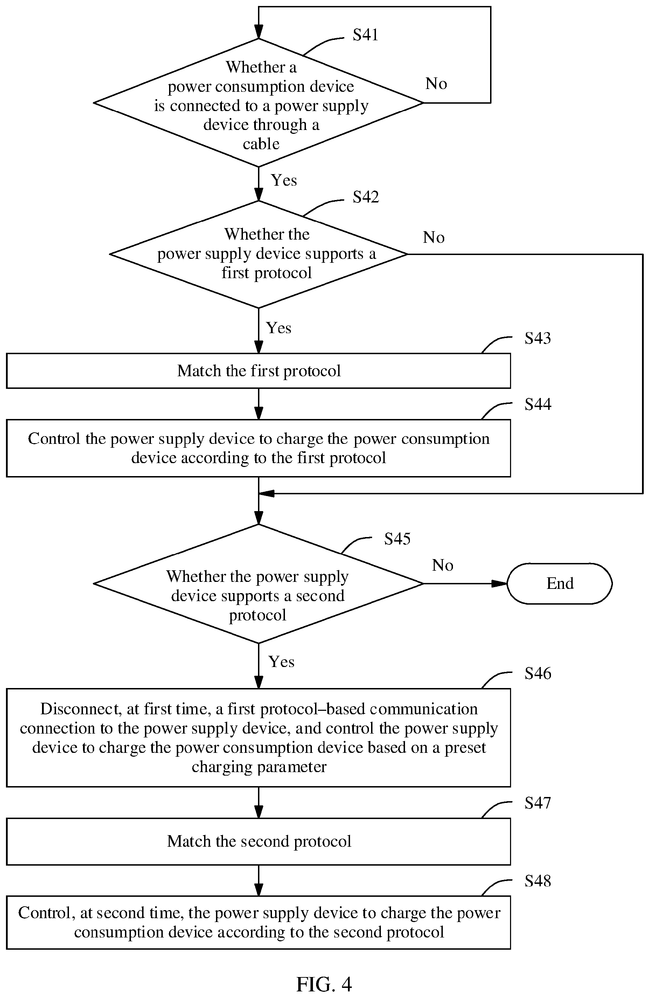

FIG. 4 is a diagram of a charging method according to an embodiment of this application. The charging method may be applied to the power consumption device 100 in any one of the foregoing embodiments. As shown in FIG. 4, the charging method includes the following steps.

Step S41: Determine whether the power consumption device 100 is connected to the power supply device 200 through the cable 300.

In step S41, the power consumption device 100 may determine, using the first protocol unit 120, whether the power consumption device 100 is connected to the power supply device 200 through the cable 300. For descriptions of determining, by the power consumption device 100 using the first protocol unit 120, whether the power consumption device 100 is connected to the power supply device 200 through the cable 300, refer to FIG. 2 and related descriptions thereof. Details are not described herein again.

It may be understood that, in step S41, when it is determined that the power consumption device 100 is not connected to the power supply device 200 through the cable 300, the power consumption device 100 may return to step S41, that is, re-determine whether the power consumption device 100 is connected to the power supply device 200 through the cable 300. When it is determined that the power consumption device 100 is connected to the power supply device 200 through the cable 300, step S42 is performed.

Step S42: Determine whether the power supply device 200 supports the first protocol.

In step S42, the power consumption device 100 may determine, using the first processor 110 and the first protocol unit 120, whether the power supply device 200 supports the first protocol. For details, refer to FIG. 2 and related descriptions thereof. Details are not described herein again.

It may be understood that, in step S42, when it is determined that the power supply device 200 supports the first protocol, steps S43 to S48 are performed. When it is determined that the power supply device 200 does not support the first protocol, a procedure may be ended, and the power consumption device 100 is charged based on the preset charging parameter, or steps S45 to S48 are performed. In FIG. 4, an example in which steps S45 to S48 are performed when it is determined that the power supply device 200 does not support the first protocol is used. The charging method in embodiments of this application is described in detail. When the power supply device 200 does not support the first protocol, the power consumption device 100 may implement charging based on the preset charging parameter by receiving the output of the power adjustment unit 220. For details, refer to FIG. 2 and related descriptions thereof. Details are not described herein again.

Step S43: Match the first protocol.

In step S43, the power consumption device 100 may implement matching of the first protocol through the first processor 110 and the charging management unit 140. For details, refer to FIG. 2 and related descriptions thereof. Details are not described herein again.

Step S44: Control the power supply device 200 to charge the power consumption device 100 according to the first protocol.

In step S44, the power consumption device 100 may output the first instruction to the power supply device 200 through the first processor 110, the first protocol unit 120, and the first channel 320, to control the power supply device 200 to charge the power consumption device 100 according to the first protocol. For details, refer to FIG. 2 and related descriptions thereof. Details are not described herein again.

Step S45: Determine whether the power supply device 200 supports the second protocol.

In step S45, when it is determined that the power supply device 200 supports the second protocol, steps S46 to S48 are performed. When it is determined that the power supply device 200 does not support the second protocol, the procedure ends.

In step S45, the power consumption device 100 may determine, using the first processor 110, the second protocol unit 130, and the second channel 330, whether the power supply device 200 supports the second protocol. For details, refer to FIG. 2 and related descriptions thereof. Details are not described herein again.

It may be understood that, in step S45, in some embodiments, when it is determined that the power supply device 200 does not support the second protocol, the power consumption device 100 may control the power supply device 200 to keep charging the power consumption device 100 according to the first protocol, and the power consumption device 100 stops identifying and determining whether the power supply device 200 supports the second protocol.

Step S46: Disconnect, at the first time, a first protocol-based communication connection to the power supply device 200, and control the power supply device 200 to charge the power consumption device 100 based on the preset charging parameter.

In step S46, the power consumption device 100 may disconnect the communication connection between the power consumption device 100 and the power supply device 200 on the first channel 320 through the first processor 110 and the first protocol unit 120, that is, disconnect the first protocol-based communication connection between the power consumption device 100 and the power supply device 200. For details, refer to FIG. 2 and related descriptions thereof, details are not described herein again.

It may be understood that, in step S46, when the power consumption device 100 is disconnected from the power supply device 200 based on the power supply protocol of the first protocol, the power supply device 200 stops charging the power consumption device 100 according to the first protocol. Then, the power supply device 200 may charge the power consumption device 100 based on the preset charging parameter.

It may be understood that, in step S46, when the power consumption device 100 disconnects the first protocol-based communication connection to the power supply device 200, the power supply device 200 may synchronously determine that the communication connection based on the first protocol between the power consumption device 100 and the power supply device 200 is disconnected. In addition, the charging management unit 140 of the power consumption device 100 may adjust the output to the battery 150 based on the first management information output by the first processor 110, or when determining that a detected input parameter is equal to the preset charging parameter, adjust the output to the battery 150 based on the preset charging parameter, so that the power consumption device 100 is charged in the preset mode. Correspondingly, the second processor 210 of the power supply device 200 may control the power adjustment unit 220 to adjust the duty cycle of the power supply device 200, to implement adjustment of the power supply device 200 on the output of the charging management unit 140. Specifically, the power adjustment unit 220 adjusts an output parameter of the power adjustment unit 220 to be equal to the preset charging parameter, to charge the power consumption device 100 based on the preset charging parameter.

Step S47: Match the second protocol.

In step S47, the power consumption device 100 may implement matching of the second protocol through the first processor 110 and the charging management unit 140. For details, refer to FIG. 2 and related descriptions thereof. Details are not described herein again.

Step S48: Control, at the second time, the power supply device 200 to charge the power consumption device 100 according to the second protocol.

In step S48, the power consumption device 100 may output the second instruction to the power supply device 200 at the second time through the first processor 110, the second protocol unit 130, and the second channel 330, to control the power supply device 200 to charge the power consumption device 100 according to the second protocol. For details, refer to FIG. 2 and related descriptions thereof. Details are not described herein again.

It may be understood that time for performing step S47 may be any time between the first time and the second time. In addition, in this embodiment of this application, an execution sequence of steps S46 and S47 is not limited. For example, in some embodiments, step S47 and step S46 may be performed synchronously.

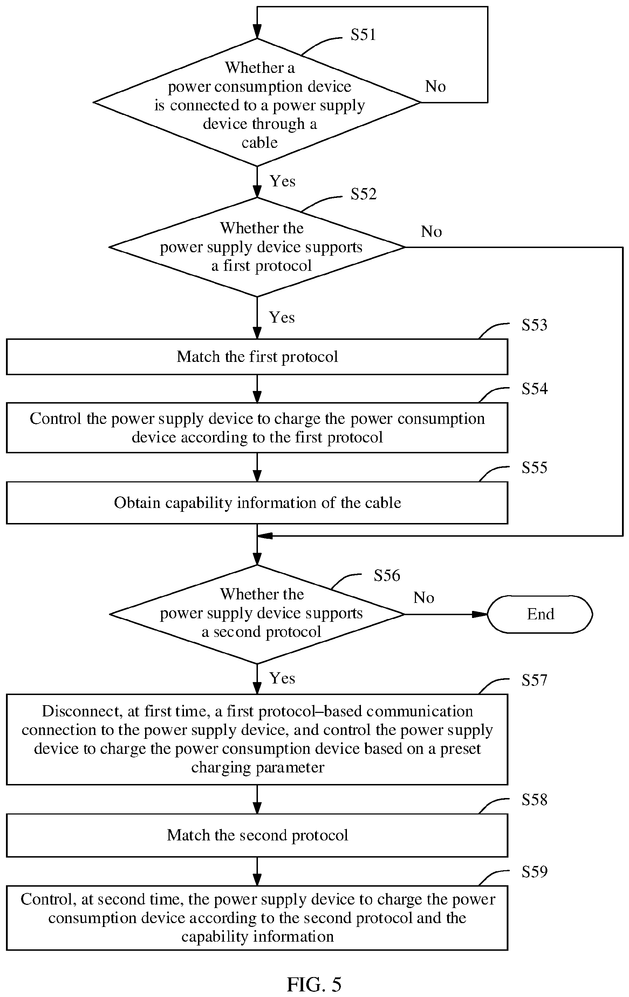

FIG. 5 is a diagram of a charging method according to another embodiment of this application. As shown in FIG. 5, the charging method may include steps S51 to S59. Steps S51 to S54 are the same as or similar to steps S41 to S44 in FIG. 4, and steps S56 to S59 are the same as or similar to steps S45 to S48 in FIG. 4. Details are not described herein again. In comparison with FIG. 4, the charging method in FIG. 5 further includes step S55. In this embodiment of this application, time for performing step S55 is not limited. For example, step S55 may be performed at any time after step S51 and before step S57. As shown in FIG. 5, the following describes step S55 in detail by using an example in which steps S55 to S57 are performed after the power supply device 200 is controlled to charge the power consumption device 100 according to the first protocol (that is, between step S54 and step S56).

Step S55: Obtain the through-current capability information of the cable 300.

In step S55, a manner in which the power consumption device 100 obtains the through-current capability information of the cable 300 is not specifically limited. For a manner of obtaining the through-current capability information of the cable 300, refer to FIG. 2 and related descriptions thereof. Details are not described herein again.

It may be understood that step S59 in FIG. 5 is similar to step S48 in FIG. 4. The following describes step S59 in detail.

Step S59: Control, at the second time, the power supply device 200 to charge the power consumption device 100 according to the second protocol and the through-current capability information.

It may be understood that, after obtaining the through-current capability information, the power consumption device 100 may calculate, through the first processor 110 based on the through-current capability information and the power supply capability information corresponding to the second protocol, an actual charging parameter used by the power supply device 200 to charge the power consumption device 100 according to the second protocol. For details, refer to FIG. 2 and related descriptions thereof, details are not described herein again.

When step S59 is performed, when outputting the second instruction to the power supply device 200, the first processor 110 may simultaneously output the actual power supply parameter to the power supply device 200. The second processor 210 of the power supply device 200 may adjust, through the power adjustment unit 220, the output to the charging management unit 140 based on the actual charging parameter and the second protocol corresponding to the second instruction. For a manner in which the power adjustment unit 220 adjusts the output, refer to FIG. 2 and related descriptions thereof. Details are not described herein again.

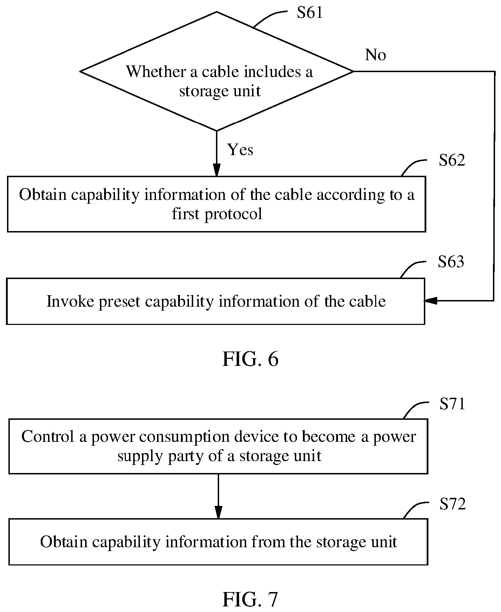

It may be understood that, in this embodiment of this application, a manner of obtaining the through-current capability information of the cable 300 in step S55 is not specifically limited. For example, refer to FIG. 6. The through-current capability information of the cable 300 may be obtained by performing the following steps.

Step S61: Determine whether the cable 300 includes the storage unit.

In step S61, the power consumption device 100 may determine, using the first processor 110 and the first protocol unit 120, whether the cable 300 includes the storage unit 310. For details, refer to FIG. 2 and related descriptions thereof. Details are not described herein again.

In step S61, when it is determined that the cable 300 includes the storage unit 310, step S62 is performed; or when it is determined that the cable 300 does not include the storage unit 310, step S63 is performed.

Step S62: Obtain the through-current capability information of the cable 300.

For example, in step S55, the power consumption device 100 may obtain, using the first protocol unit 120 and the first channel 320, the through-current capability information stored in the storage unit 310. For details, refer to FIG. 2 and related descriptions thereof. Details are not described herein again.

Step S63: Invoke the preset capability information of the cable 300.

In step S63, the power consumption device 100 may invoke the preset capability information of the cable 300 through the first processor 110. For details, refer to FIG. 2 and related descriptions thereof. Details are not described herein again.

It may be understood that, when step S55 in FIG. 5 is performed, if the cable 300 includes the storage unit 310, the power consumption device 100 obtains the through-current capability information stored in the storage unit 310, and determines, based on the obtained through-current capability information, the actual charging parameter for charging the power consumption device 100. If the cable 300 does not include the storage unit 310, the power consumption device 100 may invoke the preset capability information, and determine, based on the preset capability information, the actual charging parameter for charging the power consumption device 100.

It may be understood that, in this embodiment of this application, a manner of obtaining the through-current capability information of the cable 300 in step S62 is not specifically limited. For example, refer to FIG. 7. In some scenarios, when both the power consumption device 100 and the power supply device 200 support the first protocol, the through-current capability information of the cable 300 may be obtained by using the following steps.

Step S71: Control the power consumption device 100 to become the power supply party of the storage unit 310.

In step S71, the power consumption device 100 may supply power to the storage unit 310 through the fourth channel 350, to become the power supply party of the storage unit 310. For details, refer to FIG. 2 and related descriptions thereof. Details are not described herein again.

Step S72: Obtain the through-current capability information from the storage unit 310.

It may be understood that, for example, the first protocol is the USB PD protocol. The first protocol specifies that after the power consumption device 100 becomes the charging party of the storage unit 310, the power consumption device 100 may obtain the through-current capability information from the storage unit 310 through the first channel 320.

It should be noted that, in the first protocol, when the power consumption device 100 implements output to the storage unit 310 through the fourth pin unit A (for example, the VCONN pin), the power consumption device 100 becomes the power supply party of the storage unit 310. When the power consumption device 100 becomes the power supply party of the storage unit 310, the storage unit 310 may be in a state in which the storage unit 310 is not powered on, or may be in a state in which the power supply device 200 supplies power. This is not limited in this embodiment of this application.

It may be understood that, in some embodiments, after outputting the first change information to the power supply device 200 and receiving the second change information, the power consumption device 100 may supply power to the storage unit 310 through the fourth pin unit A. In some other embodiments, after the power consumption device 100 outputs the first change information to the power supply device 200, regardless of whether the second change information is received, the power consumption device 100 may supply power to the storage unit 310 through the fourth pin unit A, so that the power consumption device 100 becomes the power supply party of the storage unit 310. The first change information indicates the power supply device 200 to stop supplying power to the storage unit 310. After receiving the first change information, the power supply device 200 may stop supplying power to the storage unit 310, and output the second change information to the power consumption device 100. The second change information is used to prompt the power consumption device 100 that the power supply device 200 has stopped supplying power to the storage unit 310.

In some other embodiments, regardless of whether the power supply device 200 stops supplying power to the storage unit 310, and regardless of whether the power consumption device 100 outputs the first change information and receives the second change information, the power consumption device 100 supplies power to the storage unit 310, and may become the power supply party of the storage unit 310. In this way, a case in which the power consumption device 100 and the power supply device 200 simultaneously supply power to the storage unit 310 can be effectively reduced, and energy waste can be reduced. In addition, a case in which the power consumption device 100 still fails to obtain the through-current capability information when the power supply device 200 switches the charging protocol to charge the power consumption device 100 can be effectively avoided, and further, power at which the power supply device 200 charges the power consumption device 100 can be effectively increased. It may be understood that for specific beneficial effects of the charging method in this embodiment of this application, refer to the power consumption device 100 and related descriptions thereof. Details are not described herein again.

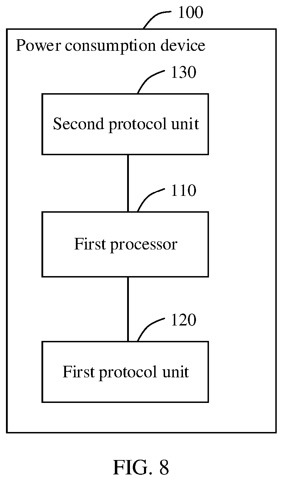

FIG. 8 is a diagram of a structure of the power consumption device 100 according to an embodiment of this application.

The power consumption device 100 may include the first processor 110, the first protocol unit 120, and the second protocol unit 130. The first protocol unit 120 is configured to enable the power consumption device 100 to support the first protocol, and the second protocol unit 130 is configured to enable the power consumption device 100 to support the second protocol. The first processor 110 may be in a communication connection to the first protocol unit 120 and the second protocol unit 130 through a bus.

The first processor 110 may perform the charging method described in the foregoing embodiment, to change the charging mode of the power consumption device 100 from charging according to the first protocol to charging according to the second protocol. For beneficial effects that can be achieved by the first processor 110, refer to the beneficial effects in the corresponding embodiments provided above. Details are not described herein again.

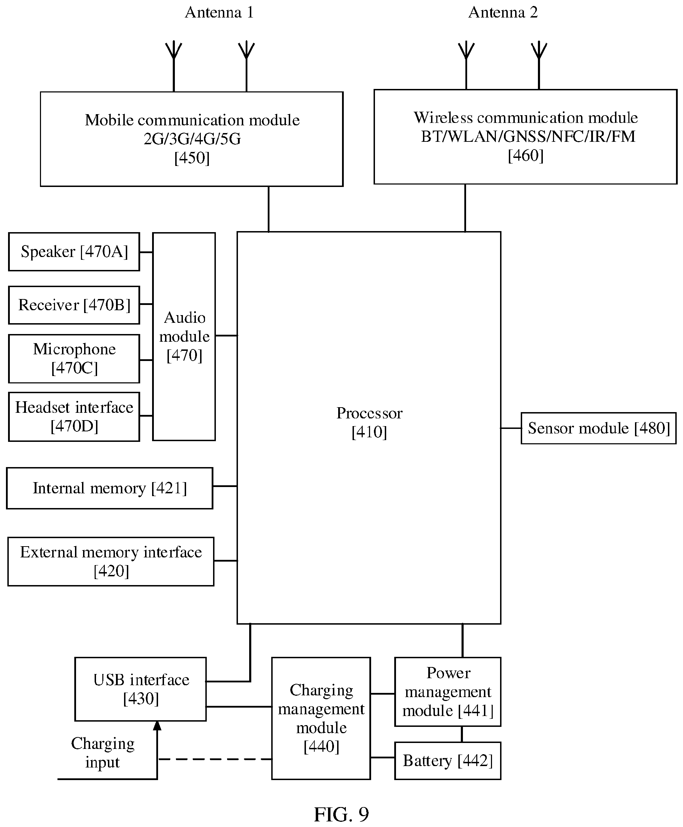

For example, FIG. 9 is a diagram of a structure of a terminal device according to an embodiment of this application. The terminal device may be the power consumption device 100 or the power supply device 200 in the foregoing embodiments.

The terminal device may include a processor 410, an external memory interface 420, an internal memory 421, a universal serial bus (universal serial bus, USB) interface 430, an antenna 1, an antenna 2, a charging management module 440, a power management module 441, a battery 442, a mobile communication module 450, a wireless communication module 460, an audio module 470, a speaker 470A, a receiver 470B, a microphone 470C, a headset interface 470D, a sensor module 480, and the like.

The structure shown in embodiments of the present invention does not constitute a specific limitation on the terminal device. In some other embodiments of this application, the terminal device may include more or fewer components than those shown in the figure, a combination of some components, or splits from some components, or a different component layout. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processor (neural-network processing unit, NPU). Different processing units may be independent components, or may be integrated into one or more processors.

A memory may be disposed in the processor 410, and is configured to store an instruction and data. In some embodiments, the memory in the processor 410 is a cache memory. The memory may store an instruction or data that has just been used or is cyclically used by the processor 410. If the processor 410 needs to use the instructions or data again, the instructions or data may be directly invoked from the memory. This avoids repeated access, and reduces waiting time of the processor 410, so that system efficiency is improved.

The charging management module 440 is configured to receive charging input from a charger. The charger may be a wireless charger or a wired charger. In some embodiments of wired charging, the charging management module 440 may receive a charging input from the wired charger through the USB interface 430. In some embodiments of wireless charging, the charging management module 440 may receive a wireless charging input through a wireless charging coil of the terminal device. When charging the battery 442, the charging management module 440 may further supply power to another terminal device through the power management module 441.

The power management module 441 is configured to connect the battery 442, the charging management module 440, and the processor 410. The power management module 441 may receive input from the battery 442 and/or the charging management module 440, and supply power to the processor 410, the internal memory 421, and the like.

The power management module 441 may be configured to monitor a performance parameter such as a battery capacity, a quantity of battery cycles, a battery charging voltage, a battery discharging voltage, and a battery health status (for example, electric leakage or impedance). In some other embodiments, the power management module 441 may alternatively be disposed in the processor 410. In some other embodiments, the power management module 441 and the charging management module 440 may alternatively be disposed in a same component.

A wireless communication function of the terminal device may be implemented through the antenna 1, the antenna 2, the mobile communication module 450, the wireless communication module 460, the modem processor, the baseband processor, and the like.

The antenna 1 and the antenna 2 are configured to transmit and receive an electromagnetic wave signal.

The mobile communication module 450 may provide a solution, applied to the terminal device, to wireless communication including 2G, 3G, 4G, 5G, and the like. In some embodiments, at least some functional modules of the mobile communication module 450 may be disposed in the processor 410.

In some embodiments, at least some functional modules of the mobile communication module 450 and at least some modules of the processor 410 may be disposed in a same device.

The wireless communication module 460 may provide a wireless communication solution that is applied to the terminal device and includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and infrared (infrared, IR).

In some embodiments, the antenna 1 of the terminal device is coupled to the mobile communication module 450, and the antenna 2 is coupled to the wireless communication module 460, so that the terminal device may communicate with a network and another device by using a wireless communication technology.

The external memory interface 420 may be configured to connect to an external memory card, for example, a Micro SD card, to extend a storage capability of the terminal device. The external storage card communicates with the processor 410 through the external memory interface 420, to implement a data storage function. For example, files such as music and videos are stored in the external storage card.

The internal memory 421 may be configured to store computer-executable program code. The executable program code includes instructions. The processor 410 runs the instructions stored in the internal memory 421, to perform various function applications and data processing of the terminal device. The internal memory 421 may include a program storage area and a data storage area. The program storage area may store an operating system, an application required by at least one function (for example, a voice playing function or an image playing function), and the like. The data storage area can store data (such as audio data and a phonebook) created during use of the terminal device, and the like. In addition, the internal memory 421 may include a high-speed random access memory, and may further include a non-volatile memory, such as at least one magnetic disk storage component, a flash memory component, and a universal flash storage (universal flash storage, UFS).

The terminal device may implement audio functions, for example, music playing and recording, by using the audio module 470, the speaker 470A, the receiver 470B, the microphone 470C, the headset interface 470D, the application processor, and the like.

The audio module 470 is configured to convert digital audio information into an analog audio signal for output, and is also configured to convert an analog audio input into a digital audio signal. The audio module 470 may further be configured to encode and decode an audio signal. In some embodiments, the audio module 470 may be disposed in the processor 410, or some function modules of the audio module 470 may be disposed in the processor 410.

The speaker 470A, also referred to as a "loudspeaker", is configured to convert an audio electrical signal into a sound signal. The terminal device may be configured to listen to music or answer a call in a hands-free mode by using the speaker 470A.

The receiver 470B, also referred to as an "earpiece", is configured to convert an audio electrical signal into a sound signal. When the terminal device is used to answer a call or listen to voice information, the receiver 470B may be placed close to a human ear to listen to a voice.

The microphone 470C, also referred to as a "mike" or a "mic", is configured to convert a sound signal into an electrical signal. When making a call or sending a voice message, the user may make a sound near the microphone 470C through the mouth, to enter a sound signal to the microphone 470C. At least one microphone 470C may be disposed in the terminal device. In some other embodiments, two microphones 470C may be disposed in the terminal device, to implement a noise reduction function in addition to collecting a sound signal. In some other embodiments, three, four, or more microphones 470C may alternatively be disposed in the terminal device, to collect a sound signal, implement noise reduction, and identify a sound source, to implement a directional recording function and the like.

The headset interface 470D is configured to connect to a wired headset. The headset interface 470D may be a USB interface 430, or may be a 3.5 mm open mobile electronic device platform (open mobile terminal platform, OMTP) standard interface or a cellular telecommunications industry association (cellular telecommunications industry association of the USA, CTIA) standard interface.

The sensor module 480 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

Certainly, the terminal device may further include a display, a camera, a button, an indicator, one or more SIM card interfaces, and the like. This is not limited in this embodiment of this application.

An embodiment of this application further provides a computer program product. When the computer program product runs on a computer, the computer is enabled to perform the foregoing related steps, to implement the charging method in the foregoing method embodiments.

An embodiment of this application further provides a computer storage medium, including computer instructions. When the computer instructions are run on the power consumption device 100, the power consumption device 100 is enabled to perform the charging method in the foregoing embodiments.

An embodiment of this application further provides a chip system. The chip system is used in the power consumption device 100. The chip system includes one or more interface circuits and one or more processors. The interface circuit and the processor are interconnected through a line. The interface circuit is configured to receive a signal from a memory of the terminal device, and send the signal to the processor. The signal includes computer instructions stored in the memory. When the processor executes the computer instructions, the power consumption device 100 performs the charging method in the foregoing embodiments.

The terminal device, the computer storage medium, the computer program product, or the chip system provided in embodiments of this application is configured to perform the corresponding method provided above. Therefore, for beneficial effects that can be achieved by the terminal device, the computer storage medium, the computer program product, or the chip system, refer to the beneficial effects in the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division of the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a component (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging method, applied to a power consumption device, wherein the power consumption device is configured to: connect to a power supply device through a cable, and control the power supply device to supply power to the power consumption device, both the power consumption device and the power supply device support a first protocol and a second protocol, and the method comprises:
controlling the power supply device to charge the power consumption device according to the first protocol;
when it is determined that the power supply device supports the second protocol, controlling the power supply device to charge the power consumption device based on a preset charging parameter; and
after controlling the power supply device to charge the power consumption device based on the preset charging parameter, controlling, based on obtained through-current capability information of the cable, the power supply device to charge the power consumption device according to the second protocol.

2. The charging method according to claim 1, wherein the method further comprises:
disconnecting, in response to determining that the power supply device supports the second protocol, a first protocol-based communication connection to the power supply device.

3. The charging method according to claim 1 or 2, wherein the power consumption device comprises a charging management unit and a battery that are electrically connected, and before the controlling the power supply device to charge the power consumption device according to the first protocol, the method further comprises:
controlling, according to the first protocol, the charging management unit to adjust output to the battery.

4. The charging method according to claim 1 or 2, wherein the power consumption device comprises a charging management unit and a battery that are electrically connected, and before the controlling the power supply device to charge the power consumption device according to the second protocol, the method further comprises:
controlling, according to the second protocol, the charging management unit to adjust output to the battery.

5. The charging method according to any one of claims 1 to 4, wherein the through-current capability information comprises a maximum current that passes through the cable and/or a maximum voltage at which the cable operates, the cable comprises a storage unit, and the method further comprises:
obtaining the through-current capability information of the cable from the storage unit.

6. The charging method according to claim 5, wherein before obtaining the through-current capability information of the cable, the method further comprises:
determining that the cable comprises the storage unit; and
supplying power to the storage unit.

7. The charging method according to any one of claims 1 to 4, wherein after the controlling the power supply device to charge the power consumption device based on the preset charging parameter, the method further comprises:
determining that the cable does not comprise a storage unit; and
invoking preset capability information, wherein the preset capability information is the through-current capability information of the cable that does not comprise the storage unit.

8. The charging method according to claim 6, wherein before the supplying power to the storage unit, the method further comprises:
outputting first change information to the power supply device, wherein the first change information indicates the power supply device to stop supplying power to the storage unit.

9. The charging method according to any one of claims 1 to 8, wherein the power consumption device comprises a first protocol unit, and the controlling the power supply device to charge the power consumption device according to the first protocol comprises:
controlling the first protocol unit to output a first instruction to the power supply device, wherein the first instruction instructs the power supply device to charge the power consumption device according to the first protocol.

10. The charging method according to any one of claims 1 to 9, wherein the power consumption device comprises a second protocol unit, and the controlling the power supply device to charge the power consumption device according to the second protocol comprises:
controlling the second protocol unit to output a second instruction to the power supply device, wherein the second instruction instructs the power supply device to charge the power consumption device according to the second protocol.

11. The charging method according to any one of claims 1 to 10, wherein charging power of the power consumption device charged based on the preset charging parameter is less than charging power of the power consumption device charged based on the first protocol, and the charging power of the power consumption device charged based on the preset charging parameter is less than charging power of the power consumption device charged based on the second protocol.

12. A power consumption device, wherein the power consumption device is configured to: connect to a power supply device through a cable, and control the power supply device to supply power to the power consumption device, the power supply device supports a first protocol and a second protocol, and the power consumption device comprises:
a first protocol unit, configured to enable the power consumption device to support the first protocol;
a second protocol unit, configured to enable the power consumption device to support the second protocol; and
a first processor, in a communication connection to the first protocol unit and the second protocol unit, and configured to perform the charging method according to any one of claims 1 to 11.
